(19) **Europäisches Patentamt / European Patent Office / Office européen des brevets**

(11) **EP 3 300 942 B1**

(12) **FASCICULE DE BREVET EUROPEEN**

(45) Date de publication et mention de la délivrance du brevet:
**17.11.2021 Bulletin 2021/46**

(51) Int Cl.:
***B60K 37/06*** *(2006.01)* ***H04N 9/31*** *(2006.01)*

(21) Numéro de dépôt: **17192243.8**

(22) Date de dépôt: **20.09.2017**

(54) **PROCÉDÉ DE PROJECTION D'IMAGES PAR UN SYSTÈME DE PROJECTION D'UN VÉHICULE AUTOMOBILE, ET SYSTÈME DE PROJECTION ASSOCIÉ**

BILDPROJEKTIONSVERFAHREN MITHILFE EINES PROJEKTIONSSYSTEMS EINES KRAFTFAHRZEUGS, UND ENTSPRECHENDES PROJEKTIONSSYSTEM

METHOD FOR PROJECTING IMAGES BY A PROJECTION SYSTEM OF A MOTOR VEHICLE, AND ASSOCIATED PROJECTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2016 FR 1659298**

(43) Date de publication de la demande:
**04.04.2018 Bulletin 2018/14**

(73) Titulaire: **Valeo Vision**
**93012 Bobigny Cedex (FR)**

(72) Inventeurs:
• **MOREL, Xavier**
**93012 BOBIGNY Cedex (FR)**
• **SOMMERSCHUH, Stephan**
**93012 BOBIGNY Cedex (FR)**
• **EL IDRISSI, Hafid**
**93012 BOBIGNY CEDEX (FR)**
• **LUO, Weicheng**
**93012 BOBIGNY Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
**EP-A1- 2 689 966     EP-A1- 2 896 937**
**GB-A- 2 482 951     US-A1- 2014 204 201**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 300 942 B1

## Description

La présente invention se situe dans le domaine de l'éclairage automobile.

En particulier, l'invention concerne un procédé de projection d'images sur la chaussée et un système de projection d'un véhicule automobile.

La conduite de nuit est plus difficile que la conduite de jour. Les panneaux ne peuvent être distingués qu'une fois qu'ils sont dans le champ de portée des feux de projection. Il est donc difficile et fatiguant de rouler de nuit. Cette difficulté peut encore être accrue lorsque le conducteur doit se repérer sur un itinéraire qu'il ne connait pas. Le système vocal du système de géolocalisation par satellite (GPS) ne fournit pas toujours une aide suffisante et il est malcommode de détacher ses yeux de la route pour regarder l'écran du GPS.

Aussi, il est souhaitable de fournir une aide à la conduite de nuit qui facilite la lecture des panneaux d'indication ou la conduite sur un itinéraire inconnu.

A cet effet, l'invention a pour objet un procédé de projection d'au moins une image par un système de projection d'un véhicule automobile comportant un dispositif de détection d'un événement, une unité de traitement propre à générer un signal de commande, un dispositif de projection propre à recevoir le signal de commande et à projeter des images numériques, une unité de stockage stockant au moins une image représentative d'un pictogramme. Le procédé de projection comporte les étapes suivantes :

a) détection d'un événement,
b) estimation du temps pour atteindre l'événement,
c) sélection d'au moins une image représentant un pictogramme caractéristique de l'événement détecté, et
d) établissement une séquence d'images représentant une animation dudit pictogramme, ladite séquence d'images étant cadencée en fonction du temps estimé au cours de l'étape b) ; et
e) projection de ladite séquence d'images sur la chaussée.

Le document EP 2 689 966 A1 ne divulgue pas en particulier les étapes d) et e) de l'objet de la revendication 1.

Selon des modes de réalisation particulier, le procédé de projection selon l'invention comporte l'une ou plusieurs ses caractéristiques suivantes :

-   le procédé de projection comporte en outre les étapes suivantes :

    •   capture d'une image du conducteur du véhicule automobile et détermination de la position du conducteur dans un référentiel prédéfini dit référentiel de projection Rp,
    •   calcul d'une matrice de transformation M en fonction de la position du conducteur déterminée,
        ladite séquence d'images étant établie à partir de ladite au moins une image sélectionnée, de ladite matrice de transformation et de paramètres prédéfinies ;

-   ladite animation comprend au moins le pivotement du pictogramme par rapport à un axe horizontal et perpendiculaire au sens de déplacement du véhicule ;
-   le procédé de projection comprend une étape d'ajout d'au moins une zone d'ombre sur ladite au moins une image sélectionnée de sorte que le pictogramme soit perçu en relief par ledit conducteur ;
-   L'animation représente un mouvement d'agrandissement du pictogramme ;
-   L'animation représente un mouvement de déplacement du pictogramme ;
-   L'animation comprend une sur-intensification ou une sous intensification d'au moins une partie d'une image de la séquence d'images ;
-   L'événement est un évènement parmi l'arrivée d'une bifurcation, d'un virage dangereux, d'un dos d'âne et d'une sortie d'autoroute.
-   le dispositif de détection est un dispositif de localisation géographique du véhicule et dans lequel l'événement est une indication du parcours à suivre pour réaliser un itinéraire sélectionné par le conducteur.
-   Le procédé comporte en outre une étape de capture d'une image du conducteur automobile et dans lequel l'étape de détermination de la position du conducteur dans un référentiel prédéfini dit référentiel de projection (Rp) est mise en œuvre à partir de l'image capturée.

L'invention concerne également un système de projection d'images d'un véhicule automobile, ledit système de projection comportant :

-   un dispositif de détection d'un événement,
-   un dispositif d'estimation du temps pour atteindre l'événement,

- une unité de stockage apte à stocker au moins une image représentant un pictogramme caractéristique d'un événement,
- une unité de traitement propre à sélectionner dans l'unité de stockage au moins une image représentant un pictogramme caractéristique de l'événement détecté, l'unité de traitement étant conformée pour établir une séquence d'images représentant une animation dudit pictogramme, ladite séquence d'images étant cadencée en fonction du temps estimé par le dispositif d'estimation, et
- un dispositif de projection apte à projeter ladite séquence images sur la chaussée.

Selon des modes de réalisation particulier, le système de projection selon l'invention comporte l'une ou plusieurs ses caractéristiques suivantes :

- l'unité de traitement est apte à déterminer la position du conducteur dans un référentiel prédéfini dit référentiel de projection à partir de la au moins une image capturée, l'unité de traitement étant propre à calculer une matrice de transformation en fonction de la position du conducteur déterminée, l'unité de traitement étant apte à établir ladite séquence d'images à partir de ladite au moins une image sélectionnée, de ladite matrice de transformation et de paramètres prédéfinies ;
- le dispositif de projection comporte une source lumineuse apte à émettre un faisceau lumineux, un dispositif imageur apte à imager la séquence d'images et un projecteur apte à projeter sur la chaussée la séquence d'images ;
- le système comporte un imageur apte à capturer le conducteur automobile et l'unité de traitement est apte à rechercher la position du conducteur sur l'image capturée et à définir la matrice de transformation M à partir de la position du conducteur déterminée.

L'invention sera mieux comprise à la lecture de la description qui va suivre, donnée uniquement à titre d'exemple et faite en se référant aux figures sur lesquelles :

- la figure 1 est une vue schématique du système de projection selon un premier mode de réalisation de l'invention,
- la figure 2 est un diagramme représentant les étapes du procédé de projection selon un premier mode de réalisation de l'invention,
- la figure 3 est un diagramme représentant le détail d'une étape du procédé illustré sur la figure 2,
- la figure 4 est une vue de côté d'un véhicule équipé d'un système de projection selon un premier mode de réalisation de l'invention,
- la figure 5 est une vue en perspective de plots pouvant être imagés par le procédé de projection selon la présente invention, et
- la figure 6 est une vue en perspective d'une première image d'une séquence d'images,
- la figure 7 est une vue en perspective de la dernière image de la séquence d'images illustrée sur la figure 6,
- la figure 8 est une vue schématique du système de projection selon un deuxième mode de réalisation de l'invention,
- les figures 9 à 25 sont des figures de la demande de brevet numéro PCT/EP2016/071596.

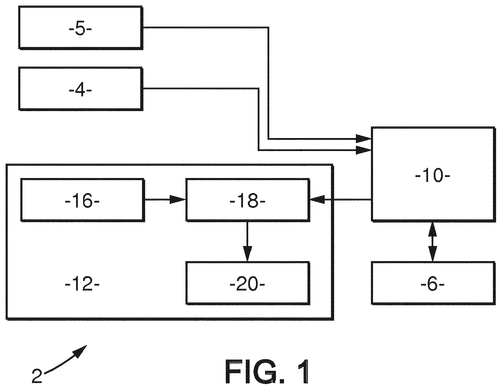

Le procédé de projection selon la présente invention est mis en œuvre par un système de projection 2 représenté schématiquement sur la figure 1.

Ce système de projection 2 comporte un dispositif 4 de détection d'un événement, un dispositif d'estimation 5 du temps pour que le véhicule atteigne l'événement, une unité de stockage 6 propre à stocker des images à projeter, et une unité de traitement 10 connectée au dispositif de détection 4, au dispositif d'estimation 5 et à l'unité de stockage 6.

Le dispositif de détection 4 est propre à détecter un événement. Selon la présente demande de brevet, un évènement est par exemple l'arrivée d'une bifurcation, d'un virage dangereux, d'un dos d'âne, d'une sortie d'autoroute etc..

Le dispositif de détection 4 est, par exemple, un système de géolocalisation par satellite du type dispositif « GPS » (acronyme du terme « Global Positionning System » en anglais).

En variante, le dispositif de détection 4 peut, par exemple, être constitué par une caméra propre à filmer la route et ses bas-côtés et une unité électronique munie d'un logiciel de traitement d'images. La caméra est apte à acquérir des images représentant la route ainsi que les panneaux situés sur le bord de la route. L'unité électronique est connectée à la caméra. Elle est adaptée pour détecter les évènements à partir du traitement des images acquises.

Le dispositif d'estimation 5 du temps pour que le véhicule atteigne l'événement comprend par exemple le système de géolocalisation par satellite « GPS » déjà utilisé dans le dispositif de détection 4.

En variante, le dispositif d'estimation 5 comprend un dispositif de mesure de la vitesse du véhicule et une unité électronique de traitement connectée au dispositif de mesure de la vitesse du véhicule et au dispositif de détection 4. Dans ce cas, l'unité électronique est apte à déterminer le temps pour atteindre l'événement à partir de la vitesse du véhicule et de la distance entre le véhicule et l'événement, distance donnée par le dispositif de détection 4.

L'unité de stockage 6 est une mémoire de type ROM, UVPROM, PROM, EPROM ou EEPROM. Elle est propre à stocker des images chacune représentant un pictogramme.

Un pictogramme est un signe graphique représentatif d'une situation dont le sens est susceptible d'être compris rapidement. Le pictogramme comporte un dessin figuratif et/ou des symboles alphanumériques. Les pictogrammes sont caractéristiques des évènements. Ils peuvent par exemple représenter un symbole d'un panneau de signalisation routière, des lignes, des flèches de guidage ou des plots routiers.

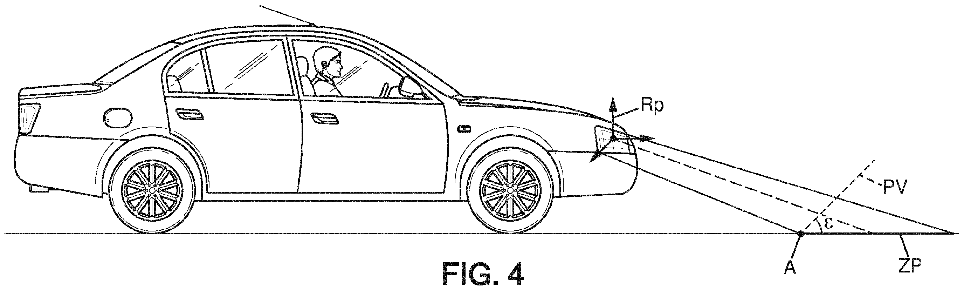

L'unité de stockage 6 est également apte à stocker les coordonnées de la position du conducteur dans un référentiel prédéfini, dit référentiel de projection Rp. Ce référentiel Rp a été représenté sur la figure 4. En particulier, l'unité de stockage 6 stocke les coordonnées de la position des yeux du conducteur dans ce référentiel Rp. Cette position est une position moyenne établie à partir de la, position des yeux de plusieurs conducteurs ayant différentes tailles ou différentes corpulences.

L'unité de traitement 10 est une unité de calcul de type processeur.

Le système de projection 2 selon le premier mode de réalisation de l'invention comporte en outre un dispositif de projection 12 propre à projeter des images sur la chaussée.

Le dispositif de projection 12 comporte une source lumineuse 16 propre à émettre un faisceau lumineux, un dispositif imageur 18 propre à imager une image numérique à partir du faisceau lumineux issu de la source lumineuse 16 et d'un signal de commande issus de l'unité de traitement, et un projecteur 20 conformé pour recevoir l'image imagée par le dispositif imageur 18 et la projeter sur la chaussée.

La source lumineuse 16 est, par exemple, constituée par une diode électroluminescente et un collimateur. En variante, la diode électroluminescente est remplacée par une source laser.

Le dispositif imageur 18 est, par exemple, constitué par une matrice de micro-miroirs. La matrice de micro-miroirs est généralement désignée par l'acronyme DMD (de l'anglais « Digital Micro-mirror Device »). Elle est connectée à l'unité de traitement 10. Elle comprend un grand nombre de micro-miroirs répartis selon des lignes et des colonnes. Chaque micro-miroir est propre à recevoir une partie du faisceau lumineux émis par la source lumineuse 16 et à la réfléchir en direction du dispositif de projection 20 ou en direction d'un absorbeur de lumière. L'ensemble des micro-miroirs est adapté pour projeter une image numérique.

En variante, d'autres types de dispositif imageur peuvent être utilisés dans la présente invention, tel que par exemple des dispositifs imageurs à base de MEMS, de matrice LED ou d'un écran LCD.

Le projecteur 20 comprend généralement une lentille d'entrée et une lentille de sortie. Ces lentilles sont réalisées en matière plastique et/ou en verre.

La lentille de sortie est par exemple une lentille convergente.

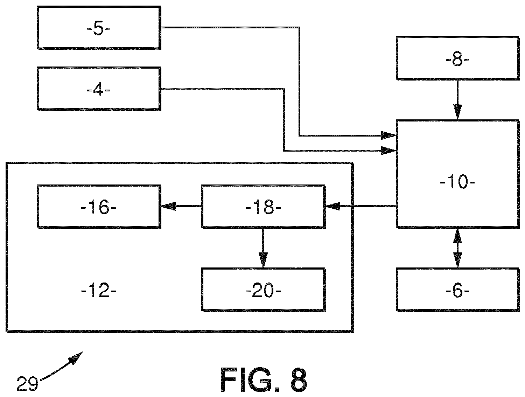

Un dispositif de projection 29 selon un second mode de réalisation est représenté sur la figure 8. Ce dispositif de projection 29 est identique au dispositif de projection 2 selon le premier mode de réalisation de l'invention à l'exception du fait que l'unité de stockage 6 ne comporte pas les coordonnées de la position du conducteur dans le référentiel de projection Rp et que le système de projection comporte un imageur connecté à l'unité de traitement. L'imageur est apte à imager le conducteur du véhicule automobile. L'imageur est, par exemple, constitué par une caméra ou un appareil photo. La caméra du dispositif anti-endormissement (en anglais driver monitoring system ») pourrait être utilisée. L'unité de traitement est apte à rechercher la position du conducteur sur l'image capturée par traitement d'image. Ce traitement d'image est réalisé par exemple à l'aide d'une détection de contour. En particulier, l'unité de traitement recherche la position des yeux du conducteur sur l'image capturée. Puis, la position des yeux du conducteur est définie dans un référentiel situé sur le dispositif de projection Rp.

En variante, la séquence d'images représente une animation d'un pictogramme cadencée en fonction du temps estimé par le dispositif d'estimation 4, mais les étapes 38 à 44 ne sont pas mises en œuvre. En conséquence, les pictogrammes de cette animation ne donnent pas l'impression visuelle au conducteur d'être établie dans un plan différent de la chaussée.

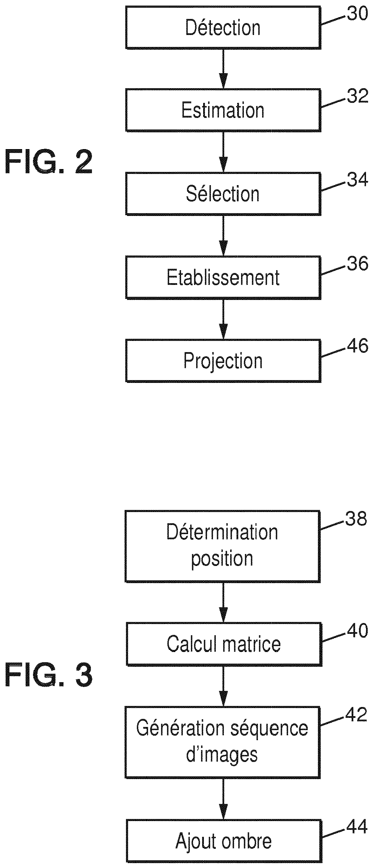

En référence à la figure 2, le procédé de projection selon la présente invention débute par une étape 30 de détection d'un évènement réalisé par le dispositif de détection 4. Après détection, le dispositif de détection 4 transmet à l'unité de traitement 10 l'information de détection d'un évènement ainsi que l'information relative au type d'événement détecté.

Au cours d'une étape 32, le dispositif d'estimation 5 estime le temps qu'il va falloir au véhicule automobile pour atteindre l'évènement. Il transmet cette information en continue et en temps réel à l'unité de traitement 10. Ainsi, si le véhicule automobile se met à accélérer après une première estimation faite par le dispositif d'estimation, le dispositif estime à nouveau le temps nécessaire pour atteindre l'évènement et transmet cette seconde estimation à l'unité de traitement 10.

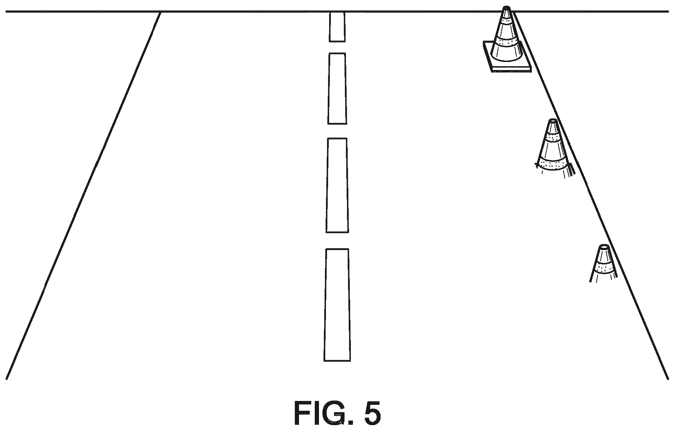

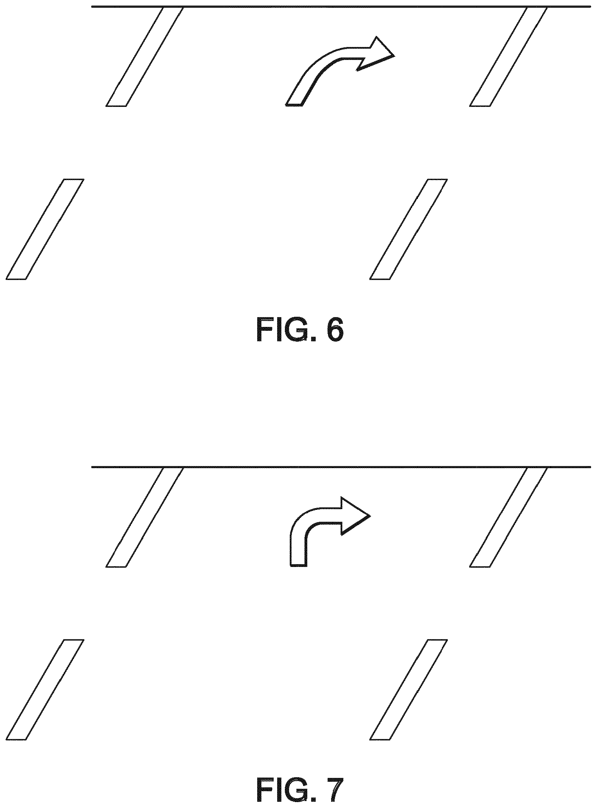

Au cours d'une étape 34, l'unité de traitement sélectionne dans l'unité de stockage 6 au moins une image représentative d'un pictogramme particulier caractéristique de l'événement détecté parmi l'ensemble des images stockée dans l'unité de stockage et en fonction de l'événement détecté par le dispositif de détection 4. L'image sélectionnée est transmise de l'unité de stockage 6 vers l'unité de traitement 10. Ainsi, lorsque l'évènement est relatif à des travaux le long des bas-côtés de la chaussée, l'unité de traitement 10 sélectionne une image représentative d'un alignement de plots routiers, comme représenté sur la figure 5. Lorsque l'évènement est relatif à une bifurcation sur la droite ou à un changement de direction vers la droite, l'unité de traitement 10 sélectionne une image représentative d'une flèche, comme représenté sur les figures 6 et 7.

Au cours d'une étape 36, l'unité de traitement 10 établit une séquence d'images représentant une animation dudit pictogramme, ladite séquence d'images étant cadencée en fonction du temps estimé au cours de l'étape 32.

Selon un premier mode de réalisation de l'invention, l'animation comprend le pivotement du pictogramme représenté sur l'image sélectionné par rapport à un axe horizontal A-A et perpendiculaire au sens de déplacement du véhicule automobile, comme illustré sur la figure 4. Par exemple, la figure 6 représente la projection sur la chaussée de la première image d'une séquence d'images représentant une flèche dirigée vers la droite. La figure 7 représente la projection sur la chaussée de la dernière image de cette même séquence d'images représentant une flèche dirigée vers la droite.

L'impression visuelle de pivotement de l'image par rapport à l'axe horizontal A-A nécessite un traitement particulier de l'image sélectionnée. Le détail de ce traitement particulier est représenté sur la figure 3 et va être décrit en détail ci-dessous.

En référence à la figure 3, l'étape d'établissement d'une séquence d'images débute par une étape 38 au cours de laquelle la position du conducteur est déterminée dans le référentiel de projection Rp. Cette détermination est réalisée par recherche de coordonnées dans l'unité de stockage 6. En particulier, les coordonnées de la position des yeux du conducteur sont recherchées.

Au cours d'une étape 40, l'unité de traitement 10 calcule une matrice de transformation M en fonction de la position des yeux du conducteur dans le référentiel de projection Rp. Cette matrice de transformation M est conformée de manière à déformer l'image sélectionnée de telle manière que le pictogramme puisse apparaitre aux yeux du conducteur comme si il s'étendait dans un plan de visualisation PV différent du plan défini par la chaussée.

Un exemple de plan PV a été représenté sur la figure 4. En multipliant la matrice de transformation M à l'image sélectionnée, on obtient une image déformée de telle manière que le conducteur du véhicule n'a pas l'impression de visualiser une image s'étendant à plat sur la chaussée dans la zone ZP définie en gras sur la figure 4, mais il a l'impression de visualiser une image qui s'étendrait dans le plan PV. En réalité, l'image est bien projetée sur la zone ZP de la chaussée.

Ce plan PV s'étend d'un angle $\varepsilon$ par rapport au plan de la chaussée. La matrice de transformation M est fonction de ce paramètre d'angle $\varepsilon$. Cet angle $\varepsilon$ est l'angle entre le plan de la chaussée et le plan dans lequel le pictogramme apparaît aux yeux du conducteur.

Une manière de calculer cette matrice de transformation a fait l'objet du dépôt d'une précédente demande de brevet le 13 septembre 2016 sous le numéro PCT/EP2016/071596. Cette précédente demande de brevet n'a pas encore été publiée. Cette demande de brevet a été copiée à la fin de la description de cette demande de brevet pour donner un exemple de mise en œuvre de la présente invention.

Au cours d'une étape 42, l'unité de traitement génère une séquence d'images qui lorsqu'elle est projetée donne une impression visuelle de pivotement du pictogramme autour de l'axe horizontal A-A.

Cette séquence d'images est obtenue par génération de plusieurs matrices de transformation M ayant différent angles $\varepsilon$ puis par multiplication de ces matrices de transformation M par l'image sélectionnée.

L'unité de traitement 10 est adaptée pour cadencer la séquence d'images en fonction du temps estimé au cours de l'étape 32 de telle manière que plus la vitesse d'impression visuelle de pivotement est fonction de la distance entre le véhicule et l'événement. Si la vitesse du véhicule augmente, l'impression visuelle de vitesse de pivotement par rapport à l'axe horizontal A-A est augmentée.

Au cours d'une étape 44, l'unité de traitement 10 ajoute des zones d'ombre sur les images de la séquence d'images pour donner l'impression visuelle au conducteur que le pictogramme représenté sur l'image transformée soit en relief. Cet ajout d'ombre est réalisé par des techniques de traitement d'images connues. L'unité de traitement 10 génère un signal de commande représentatif de la séquence d'images et le transmet au dispositif imageur 18.

Au cours d'une étape 46, le dispositif de projection 20 projette la série d'images sur la chaussée cadencée en fonction du temps estimée par le dispositif d'estimation 4.

En variante, l'étape 44 peut ne pas être mise en œuvre.

Selon un second mode de réalisation de l'invention non représenté, l'animation comprend un mouvement de déplacement du pictogramme. Par exemple, si le pictogramme est une flèche dirigée vers la droite. Cette flèche peut être déplacée du centre de la chaussée vers la droite. Dans ce cas, l'étape de sélection 34 comprend une étape de sélection de plusieurs images formant une séquence préétablie représentant un déplacement de la flèche vers la droite. L'étape d'établissement de la série d'images consiste alors uniquement en un cadencement de ces images en fonction du temps estimée par le dispositif d'estimation 4. Les étapes 38 à 40 ne sont pas mises en œuvre dans ce mode de réalisation.

Selon un troisième mode de réalisation de l'invention non représenté, l'animation comprend un mouvement d'agrandissement du pictogramme. De la même façon dans ce cas, l'étape de sélection 34 comprend une étape de sélection de plusieurs images formant une séquence d'images préétablie représentant un agrandissement du pictogramme.

Un exemple de mouvement d'agrandissement est représenté sur la figure 5 dans le cas dans lequel le pictogramme représente un plot routier traité de manière à apparaître visuellement pour le conducteur dans un plan vertical. Dans l'exemple illustré sur la figure 5, l'unité de traitement a sélectionné, au cours de l'étape 34, une séquence d'images. Puis, une unique matrice de transformation M ayant un angle ε fixe a été appliquée aux images de la séquence sélectionnée afin que le conducteur ait l'impression visuelle que le plot routier s'étende dans un plan vertical. Enfin, au cours d'une étape 36, les images déformées par l'application de la matrice de transformation M ont été cadencées en fonction du temps estimée par le dispositif d'estimation 4.

Selon un quatrième mode de réalisation de l'invention non représenté, l'animation comprend une sur-intensification ou une sous intensification d'au moins une partie d'une image de la séquence d'images. Cette sur-intensification ou une sous intensification est réalisée par sélection d'une séquence d'images comportant des images comportant des sur-intensification ou des sous intensification, comme dans le cas du deuxième et du troisième mode de réalisation.

Selon un cinquième mode réalisation de l'invention, le dispositif de détection 4 est un dispositif de localisation géographique du véhicule de type GPS et l'évènement est une indication du parcours à suivre pour réaliser un itinéraire sélectionné par le conducteur dans son système géographique GPS. L'étape de détection 30 et l'étape d'estimation 32 sont alors réalisées à partir des informations reçues du dispositif de localisation géographique du véhicule de type GPS.

Selon un sixième mode réalisation de l'invention mis en oeuvre par le système de projection 29 selon le deuxième mode de réalisation de l'invention illustré sur la figure 8, l'unité de traitement 10 commande l'imageur 8 afin qu'il capture une image du conducteur assis dans le véhicule automobile. La ou les images capturées sont transmises à l'unité de traitement 10.

Puis, l'unité de traitement 10 recherche la position du conducteur sur l'image capturée par traitement d'image. En particulier, la position des yeux du conducteur est recherchée sur l'image capturée. Ce traitement d'image est réalisé, par exemple, à l'aide d'une détection de contour. Puis, la position des yeux du conducteur est définie dans un référentiel situé sur le projecteur 20. Ce référentiel est appelé référentiel de projection Rp. Il est illustré sur la figure 4. Selon une variante particulièrement avantageuse, le profil de contraste du pictogramme projeté est renforcé par rapport à l'ambiance lumineuse moyenne du faisceau d'arrière-plan, sur lequel ou dans lequel le pictogramme est inclus.

A cette fin, les bordures du pictogramme, depuis l'extérieur de celui-ci vers l'intérieur et dans au moins une dimension (largeur ou hauteur) du plan de projection du pictogramme, présentent une alternance d'au moins deux zones d'intensité différentes par rapport à l'intensité moyenne du faisceau d'arrièreplan, une première zone étant d'intensité plus forte ou plus faible par rapport à cette intensité moyenne et la seconde zone étant respectivement d'intensité plus faible ou plus forte par rapport à cette intensité moyenne. Dans une variante d'exécution, la seconde zone constitue le cœur ou zone centrale du pictogramme et est alors bordée au moins dans une dimension par la première zone.

Ainsi, la perception par le conducteur ou des tiers du message constitué par le pictogramme projeté est renforcée, le temps de réaction par rapport au message projeté est diminué et la sécurité de conduite est de fait améliorée.

Le gradient d'intensité et le niveau d'intensité appliqués peuvent être constants ou varier le long du motif selon une direction de la dimension de projection considérée (largeur ou hauteur, par exemple respectivement de la gauche vers la droite ou depuis le bas vers le haut, correspondant à une projection champ proche du véhicule vers l'horizon). En outre, cette variation peut être statique ou dynamique, c'est-à-dire pilotée en fonction de l'environnement du véhicule : par exemple, en fonction de l'imminence d'un événement, on pourra diminuer ou renforcer dynamiquement le contraste, de sorte à générer un effet d'ondulation du motif qui apparaitra plus ou moins net dans le faisceau d'arrière-plan et à attirer l'attention du conducteur ou des tiers sur l'imminence de l'événement correspondant au pictogramme projeté (flèche de sortie ou de virage, alerte collision, piéton qui traverse, etc). On améliore ainsi encore davantage la sécurité de conduite.

Ces différents modes de réalisation peuvent être combinés.

Nous avons copié ci-dessous la demande de brevet numéro PCT/EP2016/071596.

Cette demande de brevet numéro PCT/EP2016/071596 et ses différentes applications seront mieux comprises à la lecture de la description qui suit et à l'examen des figures qui l'accompagnent.

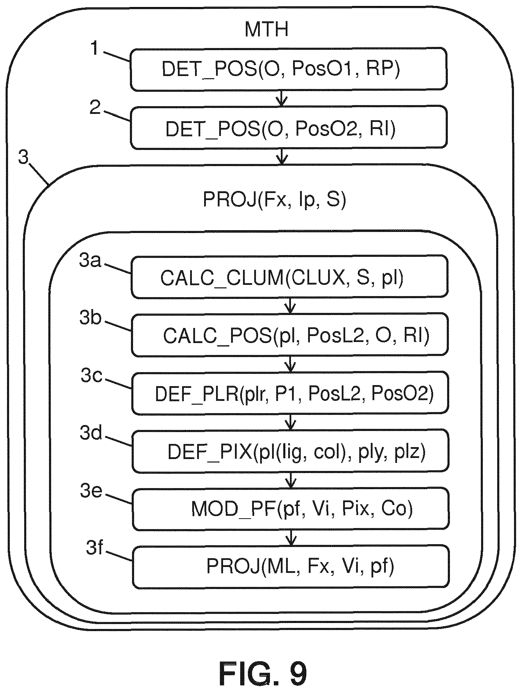

- la figure 9 représente un organigramme des étapes du procédé de projection d'au moins une image sur une surface de projection selon un mode de réalisation non limitatif de la demande de brevet numéro PCT/EP2016/071596 ;

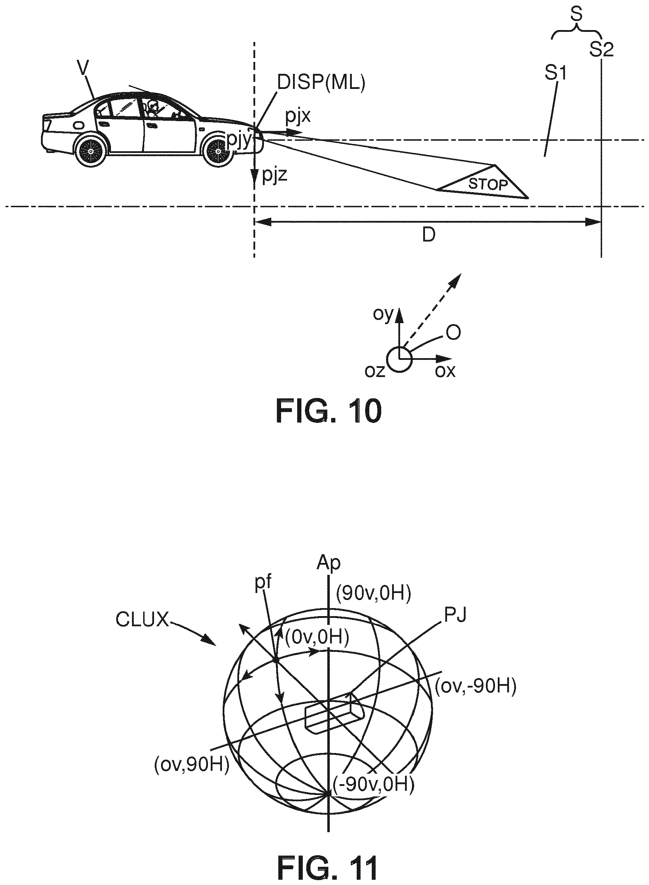

- la figure 10 représente un véhicule automobile comprenant un dispositif d'éclairage adapté pour mettre en œuvre le procédé de projection de la figure 9 selon un mode de réalisation non limitatif de la demande de brevet numéro PCT/EP2016/071596 ;
- la figure 11 représente une carte d'intensité lumineuse établie selon une étape du procédé de projection de la figure 9 selon un mode de réalisation non limitatif de la demande de brevet numéro PCT/EP2016/071596 ;

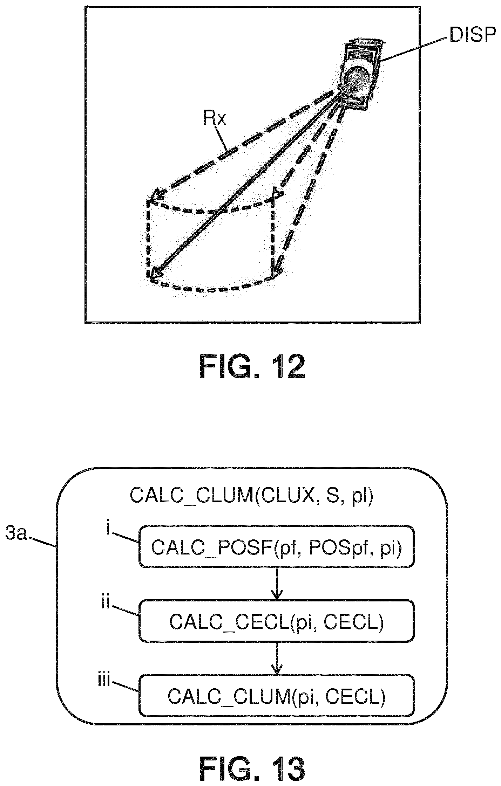

- la figure 12 représente un projecteur qui intègre un module lumineux et la direction d'un rayon lumineux d'un module lumineux dudit projecteur, ledit module lumineux étant adapté pour réaliser au moins une étape du procédé de projection de la figure 9 ;
- la figure 13 représente un organigramme illustrant des sous-étapes d'une étape d'établissement d'une carte de luminance du procédé de projection de la figure 9 selon un mode de réalisation non limitatif ;

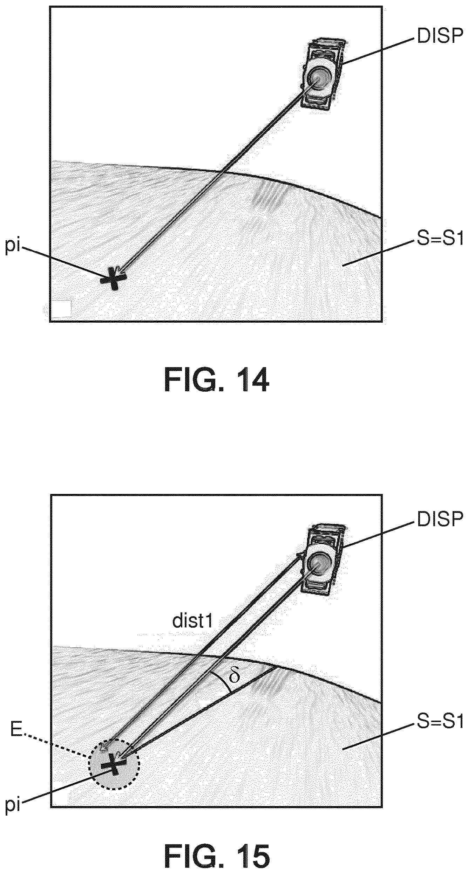

- la figure 14 représente le projecteur de la figure 12 et un point d'impact du rayon lumineux sur le sol ;
- la figure 15 représente le projecteur de la figure 14 et l'éclairement du point d'impact ;

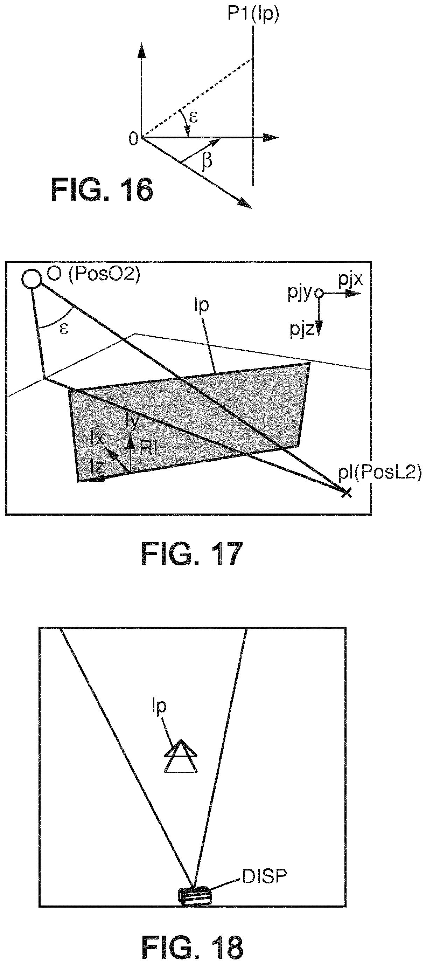

- la figure 16 indique l'angle site et l'angle azimut pris en compte dans une étape de calcul de la position d'observation d'un observateur du procédé de projection de la figure 9 ;
- la figure 17 représente schématiquement un point d'impact, une position d'observation d'un observateur extérieur au véhicule automobile dans un référentiel image et une image à projeter par le procédé de projection de la figure 9 ;
- la figure 18 illustre une image projetée selon le procédé de projection de la figure 9, image qui est vue du point de vue du conducteur dudit véhicule automobile mais qui est seulement compréhensible par un observateur extérieur au véhicule automobile ;

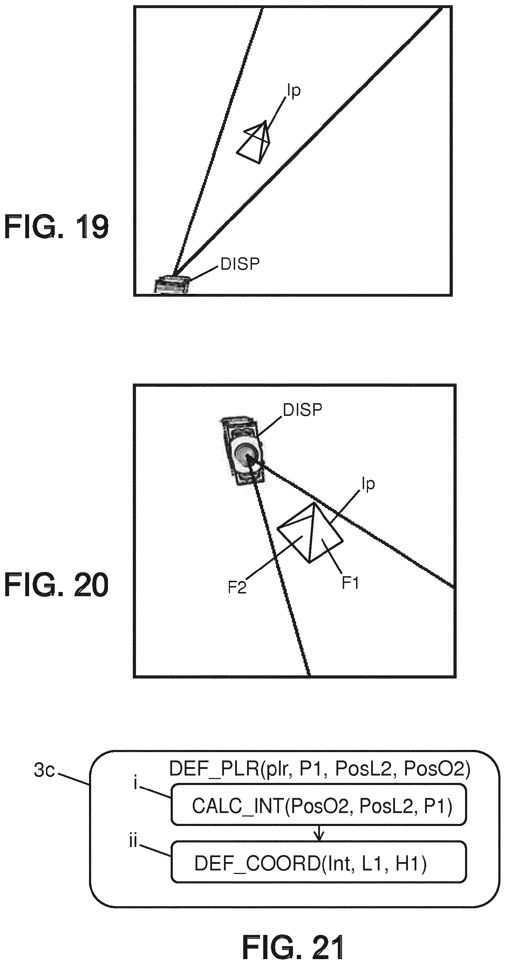

- la figure 19 illustre une image projetée selon le procédé de projection de la figure 9, image qui est vue du point de vue d'un passager arrière dudit véhicule automobile mais qui est seulement compréhensible par un observateur extérieur au véhicule automobile ;
- la figure 20 illustre une image projetée selon le procédé de projection de la figure 9, image qui est vue du point de vue dudit observateur extérieur au véhicule automobile et qui est compréhensible par ledit observateur extérieur au véhicule automobile ;
- la figure 21 représente un organigramme illustrant des sous-étapes d'une étape de définition des coordonnées d'une projection d'un point de luminance du procédé de projection de la figure 9 selon un mode de réalisation non limitatif de la demande de brevet numéro PCT/EP2016/071596 ;

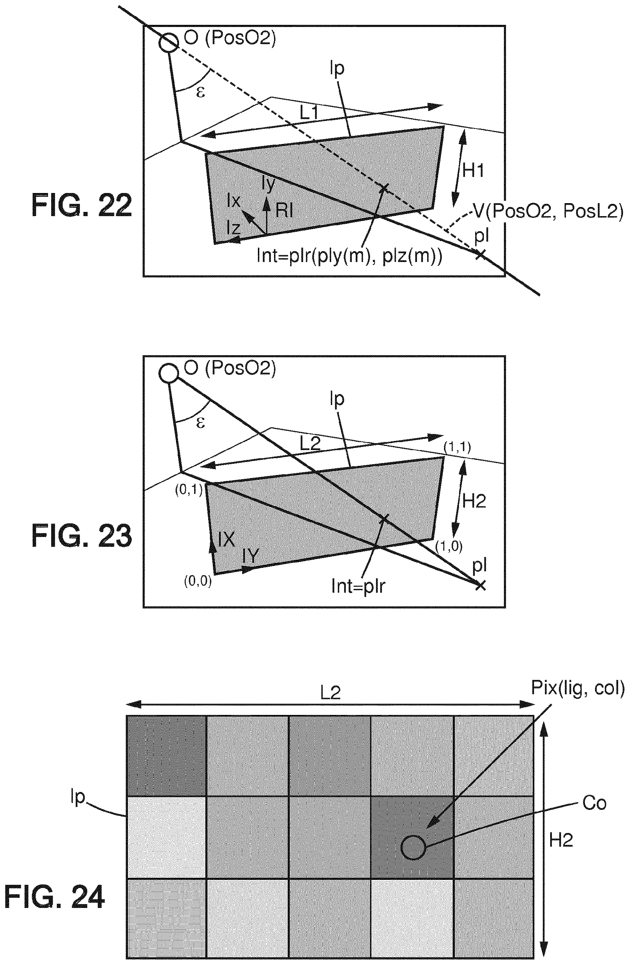

- la figure 22 représente schématiquement le point d'impact, la position d'observation de l'observateur extérieur au véhicule automobile et l'image à projeter de la figure 17 par le procédé de projection de la figure 9 et les coordonnées de l'intersection entre le point d'impact et l'image à projeter ;
- la figure 23 représente schématiquement le point d'impact, la position d'observation de l'observateur extérieur au véhicule automobile et l'image à projeter de la figure 22 normalisée ; et
- la figure 24 représente schématiquement des pixels de l'image à projeter de la figure 22 ; et

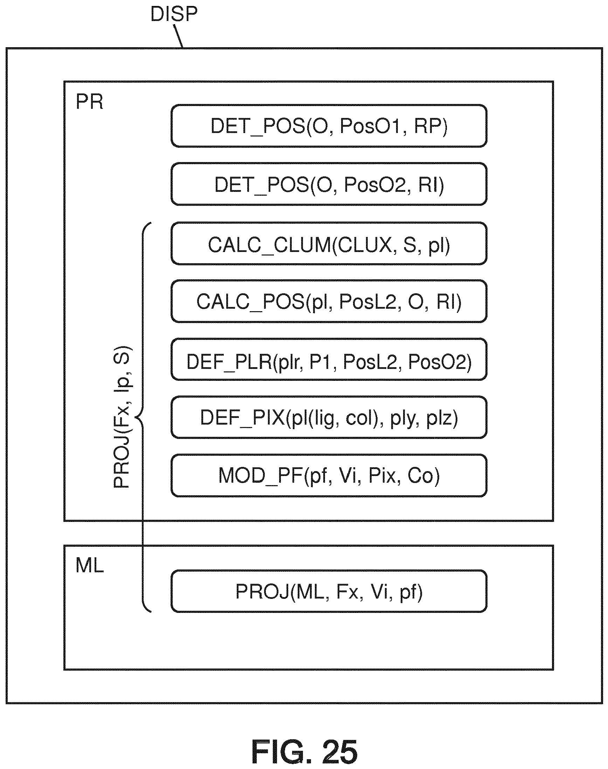

- la figure 25 illustre un dispositif d'éclairage adapté pour mettre en œuvre le procédé de projection de la figure 9.

DESCRIPTION DE MODES DE REALISATION DE LA DEMANDE DE BREVET PCT/EP2016/071596

Les éléments identiques, par structure ou par fonction, apparaissant sur différentes figures conservent, sauf précision contraire, les mêmes références.

Le procédé de projection MTH pour véhicule automobile d'au moins une image sur une surface de projection au moyen d'un module lumineux ML selon la demande de brevet numéro PCT/EP2016/071596 est décrit en référence aux figures 9 à 25.

Par véhicule automobile, on entend tout type de véhicule motorisé.

Tel qu'illustré sur la figure 9, le procédé MTH comprend les étapes de :

- détecter une position d'observation PosO1 d'un observateur O dans un référentiel module lumineux RP (étape illustrée DET_POS(O, PosO1, RP)) ;
- calculer la position d'observation PosO2 de l'observateur O dans un référentiel image RI (étape illustrée DET_POS(O, PosO2, RI));
- projeter ladite image Ip sur ladite surface de projection S en fonction de ladite position d'observation PosO2 de l'observateur O dans ledit référentiel image RI, ladite image Ip étant intégrée dans ledit faisceau lumineux Fx du module lumineux ML (étape illustrée PROJ(Fx, Ip, S)).

Tel qu'illustré sur la figure 9, la projection de ladite image Ip comporte les sous-étapes de :

- 3a) à partir d'une carte d'intensité lumineuse CLUX du module lumineux ML comprenant une pluralité d'indicatrices d'intensité pf,
  calculer une cartographie de luminance CLUM sur la surface de projection S résultant en des points de luminance pl (étape illustrée CALC_CLUM(CLUX, S, pl)) ;
- 3b) calculer la position PosL2 de chaque point de luminance pl dans le référentiel image RI (étape illustré CALC_POS(pl, PosL2, O, RI)) ;
- 3c) à partir de sa position PosL2 et de la position d'observation PosO2 de l'observateur O dans ledit référentiel image RI, définir les coordonnées ply, plz de la projection plr de chaque point de luminance pl dans le plan image P1 de ladite image à projeter Ip (étape illustrée DEF_PLR(plr, P1, PosL2, PosO2)) ;

- 3d) si ladite projection plr appartient à ladite image à projeter Ip, définir des coordonnées lig, col du pixel Pix correspondant (étape illustrée DEF_PIX(pl(lig, col), ply, plz) ;
- 3e) pour chaque projection plr d'un point de luminance pl appartenant à ladite image à projeter Ip, corriger la valeur d'intensité Vi de l'indicatrice d'intensité correspondant pf en fonction de la couleur Co du pixel correspondant Pix (étape illustrée MOD_PF(pf, Vi, Pix, Co)).

A noter que la première étape 3a notamment, de même que l'étape 3b notamment, peuvent être réalisées préalablement aux itérations des étapes suivantes. Plus généralement, les étapes décrites ne sont pas nécessairement réalisées de manière séquentielle, i.e. dans une même boucle d'itération, mais peuvent faire l'objet d'itérations différentes, avec des fréquences d'itérations différentes.

L'étape de projection de l'image Ip comprend en outre une sous-étape 3f) de projeter sur la surface de projection S le faisceau lumineux Fx avec les valeurs d'intensité Vi corrigées des indicatrices d'intensité pf (étape illustrée sur la figure 9 PROJ(ML, Fx, Vi, pf)).

Le procédé de projection MTH est adapté pour projeter une ou plusieurs images Ip en même temps. Dans la suite de la description, la projection d'une seule image est prise comme exemple non limitatif.

On notera que la projection peut se faire à l'avant du véhicule automobile V, à l'arrière ou sur ses côtés.

Le module lumineux ML permet de produire un faisceau lumineux Fx, ledit faisceau lumineux Fx comprenant une pluralité de rayons lumineux Rx qui suivent différentes directions.

Le module lumineux ML permet de modifier la valeur d'intensité Vi de chaque indicatrice d'intensité pf, c'est donc un module lumineux digitalisé. Comme décrit ci-après, on intègre ainsi l'image à projeter Ip dans le faisceau lumineux Fx du module lumineux ML.

On notera que la carte d'intensité lumineuse CLUX est discrétisée pour pouvoir être exploitée numériquement.

Le module lumineux ML est considéré comme une source lumineuse ponctuelle à partir de laquelle on discrétise l'espace autour de ladite source lumineuse. Ainsi, une indicatrice d'intensité pf est un point de l'espace éclairé par le module lumineux ML qui comporte une certaine direction dir1 et une valeur d'intensité Vi donnée procurée par le module lumineux ML dans ladite direction dir1. La direction dir1 est donnée par deux angles $\theta$ et $\delta$ (décrits plus loin).

Dans un mode de réalisation non limitatif, la surface de projection S est le sol (référencé S1) ou un mur (référencé S2). L'image qui sera projetée Ip sur le sol ou le mur est ainsi une image en 2D.

Dans un mode de réalisation non limitatif illustré sur la figure10, un dispositif d'éclairage DISP du véhicule automobile V comprend au moins un module lumineux ML et est adapté pour mettre en œuvre le procédé de projection MTH. Dans l'exemple non limitatif illustré, le dispositif d'éclairage est un projecteur.

Comme on va le voir ci-après, la position d'observation de l'observateur O est prise en compte pour la projection de l'image à projeter Ip. A cet effet, l'image à projeter Ip sera déformée de sorte qu'elle soit compréhensible par l'observateur en question, que ce soit le conducteur ou un passager avant ou arrière du véhicule automobile ou un observateur extérieur au véhicule automobile.

On se place ainsi du point de vue de l'observateur O pour qui l'on veut projeter l'image Ip. Du point de vue de l'observateur, l'image Ip ne sera pas déformée. D'un point de vue différent dudit observateur, l'image Ip sera déformée. Dans des exemples de réalisation non limitatifs, un observateur O extérieur au véhicule est un piéton, un conducteur d'un autre véhicule automobile, un cycliste, un motard etc. Il peut se trouver à l'avant, à l'arrière ou sur un des côtés du véhicule automobile V.

Dans un mode de réalisation non limitatif, l'image projetée Ip comprend au moins un symbole graphique. Ce symbole graphique va permettre d'améliorer le confort et/ou la sécurité de l'observateur O. Dans un exemple non limitatif, si l'observateur O est le conducteur du véhicule automobile, le symbole graphique pourra représenter la vitesse limite à ne pas dépasser sur la route, un symbole graphique STOP lorsque le véhicule automobile recule et qu'un obstacle (piéton, mur etc.) se trouve trop près du véhicule automobile, une flèche qui l'aide lorsque le véhicule automobile est sur le point de tourner sur une route etc. Dans un exemple non limitatif, si l'observateur O est extérieur au véhicule automobile tel qu'un piéton ou un cycliste, le symbole graphique peut être un signal STOP pour lui indiquer qu'il ne doit pas traverser devant le véhicule automobile car ce dernier va redémarrer.

Dans un exemple non limitatif, si l'observateur O est extérieur au véhicule automobile tel qu'un véhicule automobile suiveur, le symbole graphique peut être un signal STOP lorsque le véhicule automobile considéré freine pour que le conducteur du véhicule suiveur freine à son tour. Dans un autre exemple non limitatif, si l'observateur O est extérieur au véhicule automobile et est un véhicule automobile qui dépasse sur le côté, le symbole graphique peut être un symbole d'avertissement pour indiquer audit véhicule automobile de se rabattre car un autre véhicule automobile arrive en face.

Tel qu'illustrée sur la figure 10, l'image projetée Ip est un symbole STOP. Elle est orientée sur la surface de projection S, ici le sol dans l'exemple non limitatif illustré, de telle manière que l'observateur O puisse voir et comprendre ce symbole STOP. Dans l'exemple non limitatif illustré, la projection se fait à l'avant du véhicule automobile V et l'observateur O est extérieur au véhicule automobile V.

Les différentes étapes du procédé de projection MTH sont décrites en détail ci-après.

• 1) Détection de la position d'observation de l'observateur dans le référentiel module lumineux RP

Pour détecter la position d'observation PosO1 de l'observateur O dans le référentiel module lumineux RP, il faut détecter la position de l'observateur O lui-même dans le référentiel module lumineux RP. A cet effet, dans un exemple non limitatif, une caméra (non illustrée) est utilisée. Elle est adaptée pour détecter et calculer la position d'un observateur O qui se trouve à l'extérieur du véhicule automobile V.

Dans des modes de réalisation non limitatifs, la caméra est remplacée par un radar, ou un lidar.

Pour un observateur O qui se trouve à l'intérieur du véhicule automobile (conducteur ou passagers), on considère par exemple des positions d'observation de référence. Ainsi, dans un exemple non limitatif, on considère que l'œil du conducteur se situe à la position PosO1 (1,5 ;-0,5 ; 1) (exprimée en mètre) du module lumineux ML dans le cas d'un véhicule automobile qui est une voiture. Bien entendu, si le véhicule automobile est un camion, la position de l'œil par rapport au module lumineux ML est différente.

Pour un observateur extérieur, à partir de la position dudit observateur O, on peut en déduire sa position d'observation PosO1 qui correspond à la position de son œil. Par exemple, on situe la position de son œil à environ 1,5 mètres par rapport au sol.

Une telle détection de la position de l'observateur étant connue de l'homme du métier, elle n'est pas décrite en détail ici.

• 2) Calcul de la position d'observation de l'observateur dans le référentiel image RI

La position d'observation PosO1 de l'observateur O a été déterminée précédemment selon le référentiel module lumineux RP. Elle va être utilisée pour le changement de repère décrit ci-après.

Cette étape effectue un changement de repère. On passe en effet du référentiel module lumineux RP (défini par les axes pjx, pjy, pjz) au référentiel image RI (défini par les axes Ix, Iy, Iz) de l'image à projeter Ip.

Le calcul de la position d'observation PosO2 de l'observateur O dans le référentiel image RI est basé sur au moins une matrice de transformation M du référentiel module lumineux RP vers ledit référentiel image RI.

Dans un mode de réalisation non limitatif, la position PosO2 est de la forme :

$$\begin{bmatrix} pjx \\ pjy \\ pjz \\ 1 \end{bmatrix}$$

Dans un mode de réalisation non limitatif, ladite au moins une matrice de transformation M prend en compte au moins un des paramètres suivants :

- la position PosIp de l'image à projeter Ip dans le référentiel module lumineux RP ;
- la rotation RotIp de l'image à projeter Ip dans le référentiel module lumineux RP ;
- l'échelle de l'image à projeter Ip

La position PosIp de l'image à projeter Ip se déduit du référentiel module lumineux RP selon une translation selon les trois axes pjx, pjy, pjz dudit référentiel module lumineux RP.

Dans un mode de réalisation non limitatif, la matrice de transformation M est de la forme :

$$\begin{bmatrix} a & b & c & t \\ d & e & f & u \\ g & h & i & v \\ 0 & 0 & 0 & 1 \end{bmatrix}$$

où a, e et i sont les termes d'affinité ; b, c, d, f, g et h les termes de rotation ; et t, u et v les termes de translation.

Les termes d'affinité a, e et i permettent de réaliser un agrandissement ou un rétrécissement de l'image Ip, par exemple on augmente la taille globale (homothétie) de 50% ou on la réduit de 20%%, en augmentant de 50%, respectivement en réduisant de 20%, les valeurs de a, e et i. A titre d'exemple une valeur de a, e et i égale à 1 correspond à une dimension prédéterminée de référence de l'image projetée, respectivement selon les directions pjx, pjy et pjz. Il est également possible d'appliquer les facteurs d'agrandissement ou de rétrécissement selon une seule des dimensions , ou deux des dimensions (non homothétique). Il est également possible d'appliquer des facteurs d'agrandissement ou de rétrécissement différents sur certaines dimensions par rapport à d'autres, en particulier il est possible d'appliquer des facteurs d'agrandissement ou de rétrécissement différents sur chaque dimension. De cette manière, en fonction de la position PosO2 de l'œil de l'observateur O, on peut décider de projeter une image qui apparaisse à l'observateur O plus ou moins grande globalement ou selon certaines des dimensions, selon que les valeurs de a, e et i augmentent ou diminuent respectivement..

On notera que la rotation RotIp dépend de trois angles qui sont les suivants:

- $\beta$ : azimut (qui indique si l'image à projeter se situe à droite ou à gauche de l'observateur, par exemple lorsque ce dernier regarde à droite ou à gauche) ;
- $\Omega$ : devers (qui indique l'inclinaison de l'image à projeter Ip, par exemple lorsque l'observateur incline la tête sur le côté. Cela revient à pencher l'image Ip) ;
- $\varepsilon$ : site (qui indique l'effet que l'on veut donner au symbole graphique de l'image Ip).

La figure 16 illustre les angles site, et azimut et le plan P1 de l'image à projeter Ip.

On a ainsi PosO2=M*PosO1.
PosO1 est la position d'observation de l'observateur O utilisée pour la projection de l'image Ip dans le référentiel module lumineux RP.
PosO2 est la position d'observation de l'observateur O utilisée pour la projection de l'image Ip dans le référentiel image RI.

Ainsi, la position et la rotation de l'image à projeter Ip sont adaptées en fonction de l'observateur O. De cette manière, l'image à projeter Ip va être compréhensible par l'observateur O. On obtient ainsi une déformation affine de l'image du point de vue que l'on désire, appelée anamorphose.
Ainsi, pour l'œil d'un conducteur d'une voiture, l'image projetée Ip n'est pas déformée. De la même manière, pour l'œil d'un conducteur d'un camion, bien qu'il soit positionné bien au dessus du référentiel module lumineux RP, l'image projetée Ip n'est pas non plus déformée. Enfin, pour un observateur extérieur, l'image projetée Ip n'est pas non plus déformée.
On notera que l'image projetée Ip peut ainsi être bien visible de l'observateur puisque sa projection dépend de la position d'observation de l'observateur O et que l'on peut moduler son échelle comme on veut. Ainsi, même s'il est loin du véhicule automobile, l'observateur O pourra toujours comprendre et voir le(s) symbole(s) graphique(s) de l'image projetée Ip.

• 3) Projectionde l'image Ip sur la surface de projection

Cette étape comprend les sous-étapes suivantes :

• 3a) Calcul d'une cartographie de luminance CLUM

Dans un mode de réalisation non limitatif, la carte d'intensité lumineuse CLUX est stockée dans une mémoire. Elle aura préalablement était établie lors de la conception du produit, au moyen d'un goniophotomètre (non illustré). Le goniophotomètre est par exemple de type A, c'est-à-dire que le mouvement de rotation autour de l'axe horizontal supporte le mouvement de rotation autour de l'axe vertical ajusté de la rotation autour de l'axe horizontal. La carte d'intensité lumineuse CLUX donne les indicatrices d'intensité pf du module lumineux ML considéré comme une source lumineuse ponctuelle. La direction dir1 d'un rayon lumineux Rx partant du module lumineux ML est exprimée en fonction de deux angles $\theta$ et $\delta$ et est donnée par la formule suivante :

$$direction = \begin{pmatrix} \cos\theta * \cos\delta \\ \sin\theta \\ \cos\theta * \sin\delta \end{pmatrix}$$

Avec $\delta$ la rotation verticale V du goniophotomètre; et $\theta$ la rotation horizontale H du goniophotomètre.

La carte d'intensité lumineuse CLUX comprend ainsi une pluralité d'indicatrices d'intensité pf dont la direction dir1 est donnée par la formule ci-dessus, avec $\theta$ l'angle horizontal de l'indicatrice d'intensité pf, et $\delta$ l'angle vertical de l'indicatrice d'intensité pf. La carte d'intensité lumineuse CLUX est représentée sur la figure 11. On peut y voir une indicatrice d'intensité pf de coordonnées polaires $\delta$=0V, $\theta$=0H. La carte d'intensité lumineuse CLUX permet ainsi de déterminer une intensité I($\theta$,$\delta$) pour une direction donnée.

On a ainsi :

CLUX = {($\delta_i$, $0_j$, $I_{ij}$),(i, j)$\in$[1,M]$\times$[1,N]}, où M et N sont les nombres de points de discrétisation (ou indicatrices d'intensité) du faisceau lumineux Fx suivant les directions (respectivement) verticale et horizontale.

Une indicatrice d'intensité pf est donc définie par sa direction dir1 et son intensité I($\theta$,$\delta$).

La figure 12 illustre un dispositif d'éclairage DISP comprenant un module lumineux ML avec la direction d'un rayon lumineux Fx.

Le calcul de la cartographie de luminance CLUM sur la surface de projection S comprend les sous-étapes suivantes illustrées sur la figure 13.

- i) un premier calcul de la position POSpf desdites indicatrices d'intensité pf sur la surface de projection S résultant en des points d'impact pi (étape illustrée CALC_POSF(pf, POSpf, pi));
- ii) un deuxième calcul d'une cartographie d'éclairement CECL desdits points d'impact pi (étape illustrée CALC_CECL(pi, CECL)) ;
- iii) un troisième calcul de la cartographie de luminance CLUM desdits points d'impacts pi à partir de la cartographie d'éclairement CECL résultant en lesdits points de luminance pl (étape illustrée CALC_CLUM(pi, CECL)).

Les différentes sous-étapes sont détaillées ci-après.

On notera que les calculs ci-après sont effectués en fonction de la surface de projection S (sol S1 ou mur S2).

o sous-étape i)

Le premier calcul est basé sur :

- la position POSpj du module lumineux ML dans le repère cartésien x, y, z ; et
- la direction dir1 desdites indicatrices d'intensité pf décrite précédemment.

Pour le sol S1, on obtient ainsi la position POSpf1 de l'indicatrice d'intensité pf sur le sol dans le repère cartésien x, y, z avec la formule suivante.

$$POSpf1 = POSpj - (POSpj.z/dir1.z)*dir1.$$

Avec POSpj.z, la valeur z de la position du module lumineux ML (hauteur du module lumineux au dessus du sol) et dir1.z, la valeur z du vecteur directeur du rayon lumineux Rx.

Pour le mur S2, on obtient ainsi la position POSpf2 de l'indicatrice d'intensité pf sur le mur dans le repère cartésien x, y, z avec la formule suivante.

$$POSpf2 = POSpj - (D/dir1.x)*dir1.$$

Avec

- dir1.x, la valeur x du vecteur directeur du rayon lumineux Rx ;
- D, la distance entre le module lumineux ML et le mur. Dans un exemple non limitatif, D est égal à 25mètres.

On obtient ainsi un point d'impact pi (en position POSpf1 ou POSpf2) sur le sol S1 ou sur le mur S2. La figure 14 illustre un exemple non limitatif de point d'impact pi sur une surface de projection S qui est le sol S1.

o sous-étape ii)

Une fois le point d'impact pi sur le sol S1 ou sur le mur S2 déterminé, on calcule l'éclairement E de ce point d'impact pi à partir de l'intensité I($\theta$,$\delta$) de l'indicatrice d'intensité pf déterminée précédemment.

Pour le sol S1, on obtient ainsi l'éclairement $E_R$ du point d'impact pi sur le sol avec la formule suivante.

$$E_R= - (I(\theta,\delta) / \text{dist1}^2)*\cos\theta*\sin\delta$$

Avec dist1, la distance entre le point d'impact pi et le module lumineux ML.

Pour le mur S2, on obtient ainsi l'éclairement $E_M$ du point d'impact pi sur le mur avec la formule suivante.

$$E_M=(I(\theta,\delta) / \text{dist1}^2)*\cos\theta*\cos\delta$$

Avec dist1, la distance entre le point d'impact pi et le module lumineux ML.

La figure 15 illustre l'éclairement E (délimité par un cercle en pointillés) d'un point d'impact pi sur une surface de projection S qui est le sol S1.

o sous-étape iii)

Le troisième calcul est basé sur :

- l'éclairement E desdits points d'impacts pi ;
- un vecteur de position Roeil/Moeil entre la position d'un point d'impact pi de la cartographie d'éclairement CECL et la position d'observation PosO1 de l'observateur O (dans le référentiel module lumineux RP) ; et
- une fonction de diffusion de la lumière d.

d est une fonction connue qui permet de calculer la diffusion de la lumière par la surface de projection S. On notera qu'elle varie en fonction de la nature de la surface de projection S. Par exemple, la fonction d est différente si la surface est de l'asphalte, du béton, du goudron, des pavés etc.

Pour le sol S1, on obtient ainsi la luminance $L_R$ du point d'impact pi sur le sol avec la formule suivante.

$$L_R = E_R \frac{d\left(arcos\left(\frac{R_{oeil}}{||R_{oeil}||} \cdot z\right)\right)}{\frac{R_{oeil}}{||R_{oeil}||} \cdot z}$$

Avec $\frac{Roeil}{||Roeil||} \cdot z$ la valeur z du vecteur Roeil normé.

Pour le mur S2, on obtient ainsi la luminance $L_M$ du point d'impact pi sur le mur avec la formule suivante.

$$L_M = E_M \frac{d\left(arcos\left(\frac{M_{oeil}}{||M_{oeil}||} \cdot x\right)\right)}{\frac{M_{oeil}}{||M_{oeil}||} \cdot x}$$

Avec $\frac{Moeil}{||Moeil||} \cdot x$ la valeur x du vecteur Moeil normé.

Dans un mode de réalisation non limitatif, on part de l'hypothèse que la surface de projection S émet de manière uniforme dans toutes les directions. Dans ce cas, le paramètre de diffusion d ne dépend pas des angles $\delta$ et $\theta$.

Dans un mode de réalisation non limitatif, la surface de projection S est considérée un diffuseur lambertien (par exemple un corps gris). On a alors une luminance constante sur la surface de projection S proportionnelle à l'éclairement E et dans ce cas la fonction de diffusion d est un cosinus.

$$L_R = E_R \frac{\frac{a}{\pi} . cos\left(acos\frac{\vec{R}_{oeil} \cdot \vec{z}}{\|\vec{R}_{oeil}\|}\right)}{\frac{\vec{R}_{oeil} \cdot \vec{z}}{\|\vec{R}_{oeil}\|}} = \frac{a}{\pi} E_R$$

Dans ce cas, $L_R = a/\pi\ E_R$ car  où
a est l'albédo du matériau.
et $L_M = a/\pi\ E_M$

Dans des exemples non limitatifs, l'albédo de l'asphalte est de 7%, et celui du béton varie entre 17% à 27%.

• 3b) Calcul des positions des points de luminance pl dans le référentiel image-RI

La position PosL1 d'un point de luminance pl a été déterminée précédemment selon le référentiel module lumineux RP. Elle va être utilisée pour le changement de repère décrit ci-après.

De la même manière que pour le calcul de la position d'observation PosO2 de l'observateur O, cette étape effectue un changement de repère. On passe en effet du référentiel module lumineux RP (défini par les axes pjx, pjy, pjz) au référentiel image RI (défini par les axes Ix, Iy, Iz) de l'image à projeter Ip.

Le calcul de la position PosL2 d'un point de luminance pl dans le référentiel image RI est basé sur ladite au moins une matrice de transformation M du référentiel module lumineux RP vers ledit référentiel image RI (matrice de transformation M décrite précédemment).

Dans un mode de réalisation non limitatif, la position PosL2 est de la même forme que la position PosO2 décrite précédemment :

$$\begin{bmatrix} pjx \\ pjy \\ pjz \\ 1 \end{bmatrix}$$

On notera que la matrice de transformation M a été décrite lors du calcul de la position d'observation PosO2 de l'observateur O dans le référentiel image RI. Elle n'est donc pas détaillée de nouveau ici.

On a ainsi PosL2=M*PosL1.

PosL1 est la position du point de luminance pl dans le référentiel module lumineux RP.
PosL2 est la position du point de luminance pl dans le référentiel image RI.

La figure 17 illustre l'image à projeter Ip ainsi que le référentiel image RI. On peut également voir le point de luminance pl et l'œil de l'observateur O (qui correspond à la position d'observation) avec leur position respective PosL2 et PosO2 définies dans le référentiel image RI.

On notera que bien que l'image projetée Ip sur le sol ou le mur est en 2D, (deux dimensions), on peut obtenir un effet 3D (trois dimension), c'est-à-dire un effet de perspective ou de trompe l'œil, en réglant l'angle site $\varepsilon$ vu précédemment. L'observateur O (que ce soit le conducteur, un passager, ou un observateur extérieur) va voir l'image en perspective. A cet effet, l'angle site $\varepsilon$ est supérieur à -90°.

En particulier, il est supérieur à -90° et inférieur ou égal à 0°. L'effet 3D est ainsi visible entre 0 et jusqu'à -90° (non inclus).

On notera qu'à -90° l'image IP est plaquée au sol et est donc sans effet 3D. Les figures 18 à 20 illustrent une image projetée Ip qui est une pyramide. Un observateur O qui est extérieur au véhicule automobile, tel qu'un piéton, est pris comme exemple non limitatif. La pyramide est visible selon trois points de vue particuliers, le point de vue du conducteur (figure 18), le point de vue d'un passager arrière (figure 19) et le point de vue du piéton (figure 20), mais n'est vue en en effet 3D que d'un seul point de vue. Dans l'exemple non limitatif illustré, seul le piéton va voir la pyramide en 3D (comme illustrée sur la figure 20). Du point de vue du conducteur ou du passager, la pyramide apparaît déformée.

Dans une variante de réalisation non limitative, l'angle site $\varepsilon$ est égal à 0. L'observateur O regarde droit devant lui. Dans ce cas, l'observateur O va voir l'image, à savoir ici la pyramide, comme si elle était debout.

Dans une variante de réalisation non limitative, l'angle site $\varepsilon$ est sensiblement égal à -35°. Cela permet d'avoir un effet 3D relevé dans le sens de la route.

Le plan P1 de l'image Ip est ainsi perpendiculaire à la direction d'observation de l'observateur O.

Si l'angle site $\varepsilon$ est différent de -90°, la pyramide sera ainsi visible en 3D mais plus ou moins inclinée.

• définir les coordonnées ply, plz de la projection plr d'un point de luminance pl

Tel qu'illustré sur la figure 21, dans un mode de réalisation non limitatif, la définition des coordonnées ply, plz d'une projection plr d'un point de luminance pl comprend les sous-étapes de :

- i) calculer le point d'intersection Int entre (sous-étape illustrée CALC_INT(PosO2, PosL2, P1)) :

    - la droite V(PosO2, PosL2) passant par la position d'observation PosO2 dans ledit référentiel image RI de l'observateur O et par la position PosL2 dans ledit référentiel image RI dudit point de luminance pl ; et
    - le plan image P1 de l'image à projeter Ip.

- ii) déterminer les coordonnées ply, plz dudit point d'intersection Int à partir des dimensions L1, H1 de ladite image à projeter Ip (sous-étape illustrée DEF_COORD(Int, L1, H1).

Ces deux sous-étapes sont décrites ci-après.

∘ sous-étape i)

Dans le référentiel image RI, le point d'intersection Int entre la droite (œil, point de luminance) et le plan image P1 est le point de la droite (œil, point de luminance) pour lequel Ix = 0. On a ainsi :

$$\text{Int} = \text{PosO2-((PosO2.x)/(V(PosO2, PosL2).x))* V(PosO2, PosL2)}$$

Avec

- V(PosO2, posL2) le vecteur représentant la droite (œil, point de luminance) dans le référentiel image RI ;
- V(PosO2, posL2).x la valeur x du vecteur ;
- Int le point d'intersection entre la droite (œil, pl) et l'image à projeter Ip dans le référentiel image RI. Le point d'intersection Int est ainsi la projection plr du point de luminance pl sur le plan image P1 de l'image à projeter Ip ;
- PosL2.x la valeur x de la position du point de luminance pl ;
- PosO2.x la valeur x de la position d'observation de l'observateur.

On notera que l'on prend comme hypothèse que la position d'observation de l'observateur O est placé sur l'axe Ix .

La figure 22 illustre l'image à projeter Ip, le point d'intersection Int qui correspond à la projection plr du point de luminance pl sur ledit plan P1 et le vecteur V(posO2, posL2) (illustré en pointillés). On notera que la projection plr est de type centrale, de façon à produire un effet de perspective conique. Par la suite on utilisera indifféremment le terme projection plr ou projection centrale plr.

o sous-étape ii)

Les coordonnées ply, plz de la projection centrale plr du point de luminance pl dans le référentiel image RI correspondent aux coordonnées selon l'axe ly (vertical) et selon l'axe Iz (horizontal) de la position du point d'intersection Int déterminé précédemment. Dans un mode de réalisation non limitatif, elles sont exprimées en mètre.

On en déduit les coordonnées de ce point dans le repère de la figure 22 par les formules suivantes :

$$ply = (Int.y + (L1/2))/L1$$

$$plz = Int.z/H1$$

Avec,

- L1 la largeur de l'image à projeter Ip (exprimée en mètre dans un exemple non limitatif) ;
- H1 la hauteur de l'image à projeter Ip (exprimée en mètre dans un exemple non limitatif) ;
- Int.y la valeur y du point d'intersection ;
- Int.z la valeur z du point d'intersection.

La figure 22 illustre la définition des coordonnées ply et plz en mètres dans le référentiel image RI.

On notera que L1 et H1 sont des paramètres d'entrée du procédé de projection MTH.

Cette sous-étape permet de déterminer par la suite si les coordonnées ply, plz appartiennent à l'image à projeter Ip (elles doivent alors être comprises entre 0 et 1) et donc si la projection centrale plr du point de luminance pl appartient à l'image à projeter Ip.

A cet effet, dans un mode de réalisation non limitatif, on normalise l'image à projeter Ip et les coordonnées de la projection plr ainsi calculées. Cela permet de simplifier le test d'appartenance à l'image à projeter Ip.

On obtient ainsi un repère normé IX (axe vertical), IY (axe horizontal) tel qu'illustré sur la figure 23. La valeur des coordonnées ply, plz de la projection plr est maintenant comprise entre 0 et1. Dans l'exemple illustré, les axes Iy et Iz qui sont devenus respectivement les axes IX et IY. On obtient ainsi des dimensions d'image H2, L2 comprises entre 0 et 1.

La figure 23 illustre la définition des coordonnées ply et plz en valeurs sans unité dans le référentiel image RI.

On notera que la taille (L1, H1) de l'image à projeter Ip peut être définie dans cette étape 3c) ou dans l'étape avec la matrice de transformation M.

Etant donné que les dimensions L1 et H1 et donc L2, H2, la position et la rotation de l'image à projeter Ip sont connues (ce sont des paramètres d'entrée du procédé de projection MTH), on peut facilement déterminer, via ses coordonnées ply, plz, si la projection pl appartient ou non à l'image à projeter Ip.

• 3d) Définir les coordonnées du pixel Pix correspondant

La définition des coordonnées ligne (lig), colonne (col) du pixel Pix est effectué pour chaque projection plr (de point de luminance pl) qui appartient à l'image à projeter Ip, à savoir qui est située à l'intérieur du rectangle L2*H2 de l'image à projeter Ip, ce qui a été vérifié à l'étape 3c-ii).

Ainsi, si la projection plr appartient à l'image à projeter Ip, les coordonnées du pixel Pix correspondant sont calculées. Elles sont calculées comme suit.

$$Lig = -plz*L2$$

$$Col = ply*H2$$

Avec,

- lig, la ligne du pixel ;
- col, la colonne du pixel ;
- L2 la largeur de l'image à projeter Ip (cette fois-ci exprimée en pixels) ;
- H2 la hauteur de l'image à projeter Ip (cette fois-ci exprimée en pixels) ;
- ply la coordonnée de la projection plr selon l'axe IX ;
- plz la coordonnée de la projection plr selon l'axe IY.

• 3e) Correction de la valeur d'intensité de l'indicatrice d'intensité pf correspondant

Avec les coordonnées lig, col du pixel Pix, on peut récupérer la valeur de sa couleur Co dans l'image que l'on veut projeter.

Dans un exemple non limitatif, la valeur est comprise entre 0 et 255. On peut ainsi aller du blanc au noir en passant par plusieurs nuances de gris comme illustré sur la figure 24. Par le terme blanc il faut comprendre une couleur quelconque unique et par l'expression de nuances de gris il faut comprendre les nuances obtenues de ladite couleur unique entre sa nuance la plus claire et le noir. Ainsi l'image projetée n'est pas forcément composée de la couleur blanche et des nuances de gris associées aux valeurs de Co comprise entre 0 et 255, mais des nuances plus ou moins sombres d'une couleur quelconque visible par l'œil humain. Avantageusement il s'agit de blanc, de jaune, de bleu, de rouge ou d'ambre.

On corrige alors la valeur d'intensité Vi de l'indicatrice d'intensité pf correspondant.

On notera que cela est possible car le module lumineux ML est digitalisé.

Dans un premier mode de réalisation non limitatif, la correction s'effectue comme suit :

$$Vi = \sigma . Vi0*Co/255.$$

Avec :

- Vi0 la valeur d'intensité initiale de l'indicatrice d'intensité pf du module lumineux,
- Co la couleur du pixel Pix correspondant ; et
- $\sigma$ un facteur de surintensification maximale.

Dans un deuxième mode de réalisation non limitatif, la correction s'effectue comme suit :
Vi=$\varphi$.Co, avec $\varphi$ un coefficient de luminance. On effectue ainsi une substitution des luminances. Cela permet d'afficher l'image sur un fond indépendant de la distribution de lumière de base.

Cette étape est effectuée pour tous les points de luminance pl dont la projection centrale plr appartient au rectangle L2*H2 de l'image à projeter Ip.

Ainsi, le module lumineux ML peut projeter sur la surface de projection S le faisceau lumineux Fx comprenant les rayons lumineux Rx avec les valeurs d'intensité Vi corrigées des indicatrices d'intensité (étape 3f) illustrée sur la figure 9 PROJ(ML, Fx, pf, Vi). Cela permet d'afficher la bonne couleur Co pour l'indicatrice d'intensité considérée. De cette manière, l'image à projeter Ip est intégrée dans le faisceau lumineux Fx du module lumineux ML (puisqu'elle est produite par ledit module lumineux ML lui-même) et est projetée sur la surface de projection S avec les bonnes couleurs.

Ainsi, en fonction de la couleur Co désirée d'un pixel Pix, on applique un facteur de correction déterminé à la valeur d'intensité Vi de l'indicatrice d'intensité pf correspondant. Ainsi, on peut obtenir des indicatrices d'intensité dont la couleur ne dépend pas de l'intensité lumineuse du faisceau lumineux Fx lui-même. Par exemple, la pyramide projetée illustrée est de couleur homogène.

Dans le cas d'une source lumineuse indépendante du module lumineux ML qui projetterait ladite pyramide en surimposition sur ledit faisceau lumineux, cela ne serait pas le cas. Les pixels de l'image seraient plus ou moins éclairés en fonction de la répartition de l'intensité lumineuse dudit faisceau lumineux. Leur couleur varierait ainsi en fonction de l'intensité lumineuse dudit faisceau lumineux.

Par ailleurs, le fait que l'image à projeter Ip soit intégrée dans ledit faisceau lumineux Fx et non pas en surimposition permet d'obtenir un meilleur contraste de l'image sur la surface de projection S que dans le cas d'une utilisation d'une source lumineuse indépendante. Dans le cas d'une source lumineuse indépendante, le faisceau lumineux éclaire également l'image projetée. Cette dernière est par conséquent plus claire au niveau des couleurs.

Il est à noter que la valeur de couleur Co d'un pixel, ou d'une série de pixels correspondant à des parties prédéterminées de l'image projetée, peut aussi être utilisée pour renforcer l'effet 3D. Par exemple, en référence à la figure 12, les pixels correspondant à la face F1 du motif de l'image projetée et ceux correspondant à la face F2 du motif de l'image projetée, peuvent comporter des valeurs de couleur Co spécifiques et différentes. Ainsi la face F1 parait plus lumineuse que la face F2 ou inversement selon que la valeur de la couleur Co correspondant aux pixels composant la face F1 est supérieur ou inférieure à celle correspondant aux pixels composant la face F2. La valeur de la couleur Co correspondant aux pixels composant la face F1 et/ou F2 peut également varier de sorte à faire un effet de dégradé, par exemple d'un bord à l'autre de la face F1 et/ou F2, permettant de renforcer encore plus l'effet 3D.

Il est possible d'obtenir des images multicolores en utilisant plusieurs systèmes fonctionnant selon le procédé décrit ci-dessus et émettant chacun une couleur visuellement différente. Les images projetées par chaque système sont alors calculées pour se projeter sur la surface de projection S de manière superposée afin obtenir une image projetée globale multicolore.

On notera que comme la projection de l'image à projeter Ip dépend de la position d'observation de l'observateur O, elle est donc continuellement mise à jour en fonction du déplacement de l'observateur O par rapport au véhicule automobile lorsque ce dernier est à l'extérieur du véhicule automobile et en fonction du déplacement du véhicule automobile lui-même lorsque l'observateur O est à l'intérieur du véhicule automobile.. Dans un mode de réalisation non limitatif, la fréquence de rafraichissement des calculs présentés ci-dessus est ainsi fonction de la vitesse de déplacement de l'observateur par rapport au véhicule automobile pour le cas d'un observateur extérieur. Plus la vitesse augmente, plus la fréquence de rafraichissement augmente. Plus la vitesse diminue, plus la fréquence de rafraichissement diminue.

Dans un autre mode de réalisation non limitatif, la fréquence de rafraichissement des calculs présentés ci-dessus est constante. Dans un exemple non limitatif, la fréquence est d'une seconde.

Ainsi, ces calculs étant effectués en temps réel, il n'est pas nécessaire d'avoir une base de données avec des images d'un même symbole graphique pré-chargées en mémoire correspondant à plusieurs positions d'observation imaginables de l'observateur par rapport au véhicule automobile (lorsqu'il est à l'extérieur), ou dans le véhicule automobile (lorsqu'il est à l'intérieur).

Le procédé de projection MTH permet ainsi de projeter une ou plusieurs images Ip sur une surface de projection S qui est non seulement visible par un observateur situé à l'intérieur ou à l'extérieur du véhicule automobile mais également compréhensible par lui puisque l'image projetée Ip est orientée dans la direction du regard dudit observateur O.

On notera que dans le cas le cas où on projette plusieurs images Ip en même temps, on calcule la combinaison des différentes images avec le faisceau lumineux Fx avant de projeter le résultat global.

Dans un mode de réalisation non limitatif, le procédé de projection MTH est mis en œuvre par un dispositif d'éclairage DISP pour véhicule automobile V.

Dans un mode de réalisation non limitatif, le dispositif d'éclairage DISP permet la réalisation d'une fonction photométrique telle qu'un feu de croisement, feu de route ou une fonction de signalisation avant, arrière et/ou latérale. Ainsi, le dispositif d'éclairage se situe à l'avant du véhicule automobile ou à l'arrière.

Le dispositif d'éclairage DISP est illustré à la figure 25. Il comprend une unité de traitement PR et au moins un module lumineux ML. Dans des modes de réalisation non limitatifs, le dispositif d'éclairage est un projecteur ou un feu arrière.

L'unité de traitement PR est adaptée pour :

- détecter une position d'observation PosO1 d'un observateur O dans un référentiel module lumineux RP (fonction illustrée DET_POS(O, PosO1, RP)) ;
- calculer la position d'observation PosO2 de l'œil de l'observateur O dans un référentiel image RI (fonction illustrée DET_POS(O, PosO2, RI)) ;

Ledit dispositif d'éclairage DISP est adapté pour projeter ladite image Ip sur ladite surface de projection S en fonction de ladite position d'observation PosO2 de l'observateur O dans le référentiel image RI, ladite image Ip étant intégrée dans ledit faisceau lumineux Fx du module lumineux ML (fonction illustré PROJ(Fx, Ip, S).

Pour la projection de ladite image Ip sur ladite surface de projection S, l'unité de traitement PR est en outre adaptée pour :

- à partir d'une carte d'intensité lumineuse CLUX du module lumineux ML comprenant une pluralité d'indicatrices d'intensité pf, calculer une cartographie de luminance CLUM sur la surface de projection S résultant en des points de luminance pl (fonction illustré CALC_CLUM(CLUX, S, pl));
- calculer la position PosL2 de chaque point de luminance pl dans le référentiel image RI (fonction illustré CALC_POS(pl, PosL2, O, RI));
- à partir de sa position PosL2 et de la position d'observation PosO2 de l'observateur O dans ledit référentiel image RI, définir les coordonnées ply, plz de la projection plr de chaque point de luminance pl sur le plan image P1 de ladite image à projeter Ip (fonction illustré DEF_PLR(plr, P1, PosL2, PosO2));
- si ladite projection plr appartient à ladite image à projeter Ip, définir des coordonnées lig, col du pixel Pix correspondant (fonction illustré DEF_PIX(pl(lig, col), ply, plz));
- pour chaque projection plr d'un point de luminance pl appartenant à ladite image à projeter Ip, corriger la valeur d'intensité Vi de l'indicatrice d'intensité correspondant pf en fonction de la couleur Co du pixel correspondant Pix (fonction illustré MOD_PF(pf, Vi, Pix, Co));

Pour la projection de ladite image Ip sur la surface de projection S, le module lumineux ML est adapté pour projeter sur la surface de projection S le faisceau lumineux Fx avec les valeurs d'intensité VI corrigées des indicatrices d'intensité pf (fonction illustré PROJ(ML, Fx, Vi, pf)).

On notera que l'unité de traitement PR est intégrée dans le module lumineux ML ou est indépendante dudit module lumineux ML.

Bien entendu la description de de la demande de brevet PCT/EP2016/071596 n'est pas limitée aux modes de réalisation décrits ci-dessus.

Ainsi, dans un autre mode de réalisation non limitatif, un goniophotomètre de type B peut être également utilisé, c'est-à-dire que le mouvement de rotation autour de l'axe vertical supporte le mouvement de rotation autour de l'axe horizontal.

Ainsi, dans un autre mode de réalisation non limitatif, l'unité de traitement PR être déportée par rapport au dispositif d'éclairage DISP.

Ainsi, l'étape de calcul de la position d'observation PosO2 dans le référentiel image RI peut être effectuée avant ou en même temps que le calcul de la position de luminance PosL2.

Ainsi, le véhicule automobile V comprend un ou plusieurs dispositifs d'éclairage DISP adaptés pour mettre en œuvre le procédé de projection MTH décrit.

Ainsi, la demande de brevet PCT/EP2016/071596 décrite présente notamment les avantages suivants :

- elle permet de projeter une image comprenant au moins un symbole graphique qui permet d'améliorer le confort et/ou la sécurité d'un observateur qui est à l'intérieur ou à l'extérieur du véhicule automobile ;
- elle permet de projeter une image qui est visible et compréhensible par un observateur déterminé car ladite projection dépend de la position dudit observateur; On applique ainsi le même procédé de projection pour projeter une image compréhensible par le conducteur ou pour projeter une image compréhensible par le piéton ou encore par un conducteur d'un véhicule suiveur par exemple ;elle permet de déformer l'image à projeter Ip pour qu'elle soit compréhensible par un observateur déterminé. On crée ainsi une anamorphose d'une image, ladite anamorphose étant dépendante de la position d'observation de l'observateur O ;
- la position d'observation de l'observateur dans le référentiel image est fonction de la position et de la rotation de ladite image à projeter. Grâce à la rotation qui dépend notamment d'un angle site, lorsque ce dernier est réglé de façon particulière, l'observateur a l'impression de voir une image en 3D ;
- elle permet d'intégrer l'information à projeter au faisceau d'éclairage Fx du module lumineux ML du véhicule automobile. Il n'est pas nécessaire d'avoir une source lumineuse supplémentaire dédiée ;
- ainsi, contrairement à un état de la technique antérieur qui affiche une image directement sur la vitre du feu arrière du véhicule automobile et qui peut apparaître trop petite à une certaine distance, l'invention permet à un observateur extérieur qui se trouve à une certaine distance dudit véhicule automobile de bien voir l'image puisque cette dernière est projetée en fonction de la position même de l'observateur et sur une surface de projection qui n'est pas la vitre d'un feu du véhicule automobile. Les dimensions de l'image à projeter Ip ne sont plus limitées à la petite surface de projection telle que la vitre du feu ;
- elle permet de proposer une solution qui peut être utilisée pour un destinataire de l'information qui ne peut voir que l'avant ou les côtés du véhicule automobile par exemple, contrairement à une solution qui affiche une image sur les feux arrières du véhicule automobile ;
- elle permet de proposer une autre solution qu'un affichage d'image(s) sur les feux arrières du véhicule automobile ;
- elle permet de proposer une autre solution qu'une projection d'image(s) uniquement dédiée(s) au conducteur du véhicule automobile.

**Revendications**

1. Procédé de projection d'au moins une image par un système de projection (2) d'un véhicule automobile comportant un dispositif (4) de détection d'un événement, un dispositif d'estimation (5) apte à estimer le temps pour atteindre ledit événement, une unité de traitement (10) propre à générer un signal de commande, un dispositif de projection (12) propre à recevoir le signal de commande et à projeter des images numériques, une unité de stockage (6) stockant au moins une image représentative d'un pictogramme, **caractérisé en ce que** ledit procédé de projection comporte les étapes suivantes :

   a) détection (30) d'un événement,
   b) estimation (32) du temps pour atteindre l'événement,
   c) sélection (34) d'au moins une image représentant un pictogramme caractéristique de l'évènement détecté, et
   d) établissement (36) d'une séquence d'images représentant une animation dudit pictogramme, ladite séquence d'images étant cadencée en fonction du temps estimé au cours de l'étape d'estimation b) ;
   e) projection (46) de ladite séquence d'images sur la chaussée.

2. Procédé de projection selon la revendication 1, le système de projection (12) comportant en outre un imageur (18) destiné à imager un conducteur du véhicule automobile, et dans lequel le procédé de projection comporte en outre les étapes suivantes :

• détermination (38) de la position du conducteur dans un référentiel prédéfini dit référentiel de projection (Rp),
• calcul (40) d'une matrice de transformation (M) en fonction de la position du conducteur déterminée,

et dans lequel ladite séquence d'images est établie à partir de ladite au moins une image sélectionnée, de ladite matrice de transformation (M) et d'au moins un paramètre prédéfinie (ε) .

3.  Procédé de projection selon la revendication 2, dans lequel ladite animation comprend au moins le pivotement du pictogramme par rapport à un axe horizontal (A-A) et perpendiculaire au sens de déplacement du véhicule.

4.  Procédé de projection selon l'une quelconque des revendications 2 et 3, dans lequel le procédé de projection comprend une étape d'ajout (44) d'au moins une zone d'ombre sur ladite au moins une image sélectionnée de sorte que le pictogramme soit perçu en relief par ledit conducteur.

5.  Procédé de projection selon l'une quelconque des revendications 1 et 4, dans lequel ladite animation représente un mouvement d'agrandissement du pictogramme.

6.  Procédé de projection selon l'une quelconque des revendications 1 à 5, dans lequel ladite animation représente un mouvement de déplacement du pictogramme.

7.  Procédé de projection selon l'une quelconque des revendications 1 à 6, dans lequel ladite animation comprend une sur-intensification ou une sous intensification d'au moins une partie d'une image de la séquence d'images.

8.  Procédé de projection selon l'une quelconque des revendications 1 à 7, dans lequel l'évènement est un évènement parmi l'arrivée d'une bifurcation, d'un virage dangereux, d'un dos d'âne et d'une sortie d'autoroute.

9.  Procédé de projection selon l'une quelconque des revendications 1 à 7, dans lequel le dispositif de détection est un dispositif de localisation géographique du véhicule et dans lequel l'évènement est une indication du parcours à suivre pour réaliser un itinéraire sélectionné par le conducteur.

10. Procédé de projection selon l'une quelconque des revendications 1 à 9, qui comporte en outre une étape de capture d'une image du conducteur automobile et dans lequel l'étape de détermination de la position du conducteur dans un référentiel prédéfini dit référentiel de projection (Rp) est mise en œuvre à partir de l'image capturée.

11. Système de projection (2) d'au moins une image d'un véhicule automobile, ledit système de projection (2) comportant :

- un dispositif (4) de détection d'un événement,
- un dispositif (5) d'estimation du temps pour atteindre l'événement,
- une unité de stockage (6) apte à stocker au moins une image représentant un pictogramme caractéristique d'un événement ;
- une unité de traitement (10) propre à sélectionner dans l'unité de stockage (6) au moins une image représentant un pictogramme caractéristique de l'évènement détecté, l'unité de traitement (10) étant conformée pour établir une séquence d'images représentant une animation dudit pictogramme, ladite séquence d'images étant cadencée en fonction du temps estimé par le dispositif d'estimation ; et
- un dispositif de projection (12) apte à projeter ladite séquence images sur la chaussée.

12. Système de projection (2) selon la revendication 11, dans lequel l'unité de traitement (10) est apte à déterminer la position du conducteur dans un référentiel prédéfini dit référentiel de projection (Rp) à partir de la au moins une image capturée, l'unité de traitement (10) étant propre à calculer une matrice de transformation (M) en fonction de la position du conducteur déterminée, l'unité de traitement étant apte à établir ladite séquence d'images à partir de ladite au moins une image sélectionnée, de ladite matrice de transformation et d'au moins un paramètre prédéfinie.

13. Système de projection (2) selon l'une quelconques des revendications 11 et 12, dans lequel le dispositif de projection (12) comporte une source lumineuse (16) apte à émettre un faisceau lumineux, un dispositif imageur (18) apte à imager la séquence d'images et un projecteur (20) apte à projeter sur la chaussée la séquence d'images.

**14.** Système de projection (2) selon l'une quelconque des revendications 11 et 13, comportant un imageur apte à capturer le conducteur automobile et dans lequel l'unité de traitement (10) est apte à rechercher la position du conducteur sur l'image capturée et à définir la matrice de transformation (M) à partir de la position du conducteur déterminée.

**Patentansprüche**

**1.** Verfahren zum Projizieren mindestens eines Bildes durch ein Projektionssystem (2) eines Kraftfahrzeugs, umfassend eine Vorrichtung (4) zum Detektieren eines Ereignisses, eine Schätzvorrichtung (5), die fähig ist, die Zeit zum Erreichen des Ereignisses zu schätzen, eine Verarbeitungseinheit (10), die geeignet ist, ein Steuersignal zu erzeugen, eine Projektionsvorrichtung (12), die geeignet ist, das Steuersignal zu empfangen und digitale Bilder zu projizieren, eine Speichereinheit (6), die mindestens ein für ein Piktogramm repräsentatives Bild speichert, **dadurch gekennzeichnet, dass** das Projektionsverfahren die folgenden Schritte umfasst:

a) Detektieren (30) eines Ereignisses,
b) Schätzen (32) der Zeit zum Erreichen des Ereignisses,
c) Auswählen (34) mindestens eines Bildes, das ein für das detektierte Ereignis kennzeichnendes Piktogramm darstellt, und
d) Erstellen (36) einer Bildsequenz, die eine Animation des Piktogramms darstellt, wobei die Bildsequenz in Abhängigkeit von der während des Schätzschritts b) geschätzten Zeit getaktet ist;
e) Projizieren (46) der Bildsequenz auf die Fahrbahn.

**2.** Projektionsverfahren nach Anspruch 1, wobei das Projektionssystem (12) ferner eine Bildgebungsvorrichtung (18) aufweist, die dazu bestimmt ist, einen Fahrer des Kraftfahrzeugs zu abzubilden, und wobei das Projektionsverfahren ferner die folgenden Schritte umfasst:

• Bestimmen (38) der Position des Fahrers in einem vorgegebenen Bezugssystem, Projektionsbezugssystem (Rp) genannt,
• Berechnen (40) einer Transformationsmatrix (M) in Abhängigkeit von der bestimmten Position des Fahrers,

und wobei die Bildsequenz ausgehend von dem mindestens einen ausgewählten Bild, von der Transformationsmatrix (M) und von mindestens einem vorgegebenen Parameter ($\varepsilon$) erstellt wird.

**3.** Projektionsverfahren nach Anspruch 2, wobei die Animation mindestens das Schwenken des Piktogramms in Bezug auf eine horizontale und senkrecht zur Fahrtrichtung des Fahrzeugs verlaufende Achse (A-A) umfasst.

**4.** Projektionsverfahren nach einem der Ansprüche 2 und 3, wobei das Projektionsverfahren einen Schritt des Hinzufügens (44) mindestens eines Schattenbereichs auf dem mindestens einen ausgewählten Bild umfasst, so dass das Piktogramm von dem Fahrer erhaben wahrgenommen wird.

**5.** Projektionsverfahren nach einem der Ansprüche 1 und 4, wobei die Animation eine Vergrößerungsbewegung des Piktogramms darstellt.

**6.** Projektionsverfahren nach einem der Ansprüche 1 bis 5, wobei die Animation eine Verlagerungsbewegung des Piktogramms darstellt.

**7.** Projektionsverfahren nach einem der Ansprüche 1 bis 6, wobei die Animation eine Über-Intensivierung oder eine Unter-Intensivierung mindestens eines Teils eines Bildes der Bildsequenz umfasst.

**8.** Projektionsverfahren nach einem der Ansprüche 1 bis 7, wobei das Ereignis das Herannahen einer Gabelung, einer gefährlichen Kurve, einer Bodenschwelle und einer Autobahnausfahrt ist.

**9.** Projektionsverfahren nach einem der Ansprüche 1 bis 7, wobei die Detektionsvorrichtung eine Vorrichtung zur geografischen Positionsbestimmung des Fahrzeugs ist und wobei das Ereignis eine Anzeige der Strecke ist, der zum Realisieren einer vom Fahrer ausgewählten Route zu folgen ist.

**10.** Projektionsverfahren nach einem der Ansprüche 1 bis 9, das ferner einen Schritt des Aufnehmens eines Bildes des Fahrzeugfahrers umfasst und bei dem der Schritt des Bestimmens der Position des Fahrers in einem vorgegebenen Bezugssystem, Projektionsbezugssystem (Rp) genannt, ausgehend von dem aufgenommenen Bild ausgeführt wird.

11. Projektionssystem (2) zum Projizieren mindestens eines Bildes eines Kraftfahrzeugs, wobei das Projektionssystem (2) umfasst:

- eine Vorrichtung (4) zum Detektieren eines Ereignisses,
- eine Vorrichtung (5) zum Schätzen der Zeit zum Erreichen des Ereignisses,
- eine Speichereinheit (6), die fähig ist, ein Bild zu speichern, das ein für ein Ereignis kennzeichnendes Piktogramm darstellt;
- eine Verarbeitungseinheit (10), die geeignet ist, in der Speichereinheit (6) mindestens ein Bild auszuwählen, das ein für das detektierte Ereignis kennzeichnendes Piktogramm darstellt, wobei die Verarbeitungseinheit (10) dazu ausgestaltet ist, eine Bildsequenz zu erstellen, die eine Animation des Piktogramms darstellt, wobei die Bildsequenz in Abhängigkeit von der von der Schätzvorrichtung geschätzten Zeit getaktet ist; und
- eine Projektionsvorrichtung (12), die fähig ist, die Bildsequenz auf die Fahrbahn zu projizieren.

12. Projektionssystem (2) nach Anspruch 11, wobei die Verarbeitungseinheit (10) fähig ist, die Position des Fahrers in einem vorgegebenen Bezugssystem, Projektionsbezugssystem (Rp) genannt, ausgehend von dem mindestens einen aufgenommenen Bild zu bestimmen, wobei die Verarbeitungseinheit (10) geeignet ist, eine Transformationsmatrix (M) in Abhängigkeit von der bestimmten Position des Fahrers zu berechnen, wobei die Verarbeitungseinheit fähig ist, die Bildsequenz ausgehend von dem mindestens einen ausgewählten Bild, von der Transformationsmatrix und von mindestens einem vorgegebenen Parameter zu erstellen.

13. Projektionssystem (2) nach einem der Ansprüche 11 und 12, wobei die Projektionsvorrichtung (12) eine Lichtquelle (16) umfasst, die fähig ist, einen Lichtstrahl zu emittieren, eine Bildgebungsvorrichtung (18), die fähig ist, die Bildsequenz abzubilden, und einen Projektor (20), der fähig ist, die Bildsequenz auf die Fahrbahn zu projizieren.

14. Projektionssystem (2) nach einem der Ansprüche 11 und 13, das einen Bildgeber umfasst, der fähig ist, den Fahrzeugfahrer aufzunehmen, und bei dem die Verarbeitungseinheit (10) fähig ist, die Position des Fahrers auf dem aufgenommenen Bild zu suchen und die Transformationsmatrix (M) ausgehend von der bestimmten Position des Fahrers zu definieren.

## Claims

1. Method for projecting at least one image, by a projection system (2) of a motor vehicle comprising a device (4) for detecting an event, an estimation device (5) capable of estimating the time taken to reach said event, a processing unit (10) capable of generating a control signal, a projection device (12) capable of receiving the control signal and projecting digital images, and a storage unit (6) storing at least one image representative of a pictogram, **characterized in that** said projection method comprises the following steps:

a) detecting (30) an event,
b) estimating (32) the time taken to reach the event,
c) selecting (34) at least one image representing a pictogram characteristic of the detected event, and
d) establishing (36) a sequence of images representing an animation of said pictogram, said sequence of images being paced depending on the time estimated in estimation step b);
e) projecting (46) said sequence of images onto the roadway.

2. Projection method according to Claim 1, the projection system (12) further comprising an imager (18) intended to image a driver of the motor vehicle, and in which the projection method further comprises the following steps:

• determining (38) the position of the driver in a predefined reference frame referred to as the projection reference frame (Rp),
• calculating (40) a transformation matrix (M) depending on the determined position of the driver, and in which said sequence of images is established

from said at least one selected image, said transformation matrix (M) and at least one predefined parameter ($\varepsilon$).

3. Projection method according to Claim 2, in which said animation comprises at least the pivoting of the pictogram relative to a horizontal axis (A-A) perpendicular to the direction of travel of the vehicle.

4. Projection method according to either one of Claims 2 and 3, in which the projection method comprises a step (44) of adding at least one area of shadow to said at least one selected image such that the pictogram is perceived in 3D by said driver.

5. Projection method according to either one of Claims 1 and 4, in which said animation shows the pictogram increasing in size.

6. Projection method according to any one of Claims 1 to 5, in which said animation shows a displacement movement of the pictogram.

7. Projection method according to any one of Claims 1 to 6, in which said animation comprises an over-intensification or under-intensification of at least a portion of an image of the sequence of images.

8. Projection method according to any one of Claims 1 to 7, in which the event is an event chosen from an approaching junction, dangerous bend, speed bump and motorway exit.

9. Projection method according to any one of Claims 1 to 7, in which the detection device is a geographical location device of the vehicle and in which the event is an indication of the path to be followed in order to complete a route selected by the driver.

10. Projection method according to any one of Claims 1 to 9, that further comprises a step of capturing an image of the driver of the motor vehicle, and in which the step of determining the position of the driver in a predefined reference frame referred to as the projection reference frame (Rp) is implemented from the captured image.

11. System (2) for projecting at least one image, for a motor vehicle, said projection system (2) comprising:

   - a device (4) for detecting an event,
   - a device (5) for estimating the time taken to reach the event,
   - a storage unit (6) suitable for storing at least one image representing a pictogram characteristic of an event;
   - a processing unit (10) capable of selecting, from the storage unit (6), at least one image representing a pictogram characteristic of the detected event, the processing unit (10) being designed to establish a sequence of images representing an animation of said pictogram, said sequence of images being paced depending on the time estimated by the estimation device;
   and
   - a projection device (12) capable of projecting said sequence of images onto the roadway.

12. Projection system (2) according to Claim 11, in which the processing unit (10) is capable of determining the position of the driver in a predefined reference frame referred to as the projection reference frame (Rp) from the at least one captured image, the processing unit (10) being capable of calculating a transformation matrix (M) depending on the determined position of the driver, the processing unit being capable of establishing said sequence of images from said at least one selected image, said transformation matrix and at least one predefined parameter.

13. Projection system (2) according to either one of Claims 11 and 12, in which the projection device (12) comprises a light source (16) capable of emitting a light beam, an imaging device (18) capable of imaging the sequence of images and a headlamp (20) capable of projecting the sequence of images onto the roadway.

14. Projection system (2) according to either one of Claims 11 and 13, comprising an imager capable of capturing an image of the driver of the motor vehicle and in which the processing unit (10) is capable of searching for the position of the driver in the captured image and of defining the transformation matrix (M) from the determined position of the driver.

FIG. 1

FIG. 2

| Détection | 30 |
| Estimation | 32 |
| Sélection | 34 |
| Etablissement | 36 |
| Projection | 46 |

FIG. 3

| Détermination position | 38 |
| Calcul matrice | 40 |
| Génération séquence d'images | 42 |
| Ajout ombre | 44 |

FIG. 4

FIG. 5

FIG. 6

FIG. 7

FIG. 8

FIG. 9

FIG. 10

FIG. 11

DISP

Rx

## FIG. 12

CALC_CLUM(CLUX, S, pl)

3a

i — CALC_POSF(pf, POSpf, pi)

ii — CALC_CECL(pi, CECL)

iii — CALC_CLUM(pi, CECL)

## FIG. 13

DISP

pi

S=S1

**FIG. 14**

DISP

dist1

δ

E

pi

S=S1

**FIG. 15**

P1(lp)

ε

β

0

## FIG. 16

O (PosO2)

pjy○ → pjx

pjz↓

lp

ε

ly

lx RI

lz

pl(PosL2)

## FIG. 17

lp

DISP

## FIG. 18

**FIG. 19**

Ip

DISP

**FIG. 20**

DISP

Ip

F2

F1

**FIG. 21**

3c

DEF_PLR(plr, P1, PosL2, PosO2)

i

CALC_INT(PosO2, PosL2, P1)

ii

DEF_COORD(Int, L1, H1)

**FIG. 22**

O (PosO2)

ε

lp

L1

H1

ly

lx RI

lz

V(PosO2, PosL2)

pl

Int=plr(ply(m), plz(m))

**FIG. 23**

O (PosO2)

ε

lp

L2

(1,1)

H2

(0,1)

lX

lY

(1,0)

(0,0)

pl

Int=plr

**FIG. 24**

L2

Pix(lig, col)

lp

Co

H2

DISP

PR

DET_POS(O, PosO1, RP)

DET_POS(O, PosO2, RI)

CALC_CLUM(CLUX, S, pl)

CALC_POS(pl, PosL2, O, RI)

DEF_PLR(plr, P1, PosL2, PosO2)

DEF_PIX(pl(lig, col), ply, plz)

MOD_PF(pf, Vi, Pix, Co)

PROJ(Fx, Ip, S)

ML

PROJ(ML, Fx, Vi, pf)

# FIG. 25

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2689966 A1

- EP 2016071596 W